# EUROPÄISCHE PATENTSCHRIFT

(11) **EP 4 069 506 B1**
(45) Veröffentlichungstag und Bekanntmachung des Hinweises auf die Patenterteilung: **20.12.2023**
(21) Anmeldenummer: 21742043.9
(22) Anmeldetag: 22.06.2021
(51) Int. Cl.: B32B 3/08, B32B 3/26, B32B 5/02, B32B 27/08, B32B 27/12, B32B 27/32, B32B 27/36, E04D 13/00, G01M 3/16, G01N 27/12, G01N 27/48, G08B 21/20, G01M 3/18

(54) **BAUFOLIE, MIT EINER AUF DER TRÄGERSCHICHT AUFGEDRÜCKTE FEUCHTESENSOR AUFWEISENDE ELEKTRONIKEINHEIT**
INDUSTRIAL SHEETING COMPRISING AN ELECTRONIC UNIT WHICH HAS A MOISTURE SENSOR PRINTED ONTO THE SUPPORT LAYER
FEUILLE POUR LE BÂTIMENT POURVUE D'UNE UNITÉ ÉLECTRONIQUE COMPRENANT DES CAPTEURS D'HUMIDITÉ IMPRIMÉS SUR LA COUCHE SUPPORT

(30) Priorität: 22.06.2020 DE 102020003703
(43) Veröffentlichungstag der Anmeldung: 12.10.2022
(73) Patentinhaber: EWALD DÖRKEN AG, 58313 Herdecke (DE)
(72) Erfinder: SAND, Henning, 44287 Dortmund (DE); DAHMS, Severin, 44229 Dortmund (DE)
(74) Vertreter: Weidener, Jörg Michael
(86) Internationale Anmeldenummer: PCT/EP2021/066900
(87) Internationale Veröffentlichungsnummer: WO 2021/259889

(56) Entgegenhaltungen:
- WO-A1-84/03768
- WO-A1-2019/244164
- DE-B3-102019 000 605

## Beschreibung

Die vorliegende Erfindung betrifft eine Baufolie, die einen mehrlagigen Schichtaufbau aufweist. Der Schichtaufbau weist eine Trägerschicht und eine Textilschicht auf.

Die Baufolie kann im verlegten Zustand als Teil einer Gebäudehülle und/oder eines Baukörpers verwendet werden. Zudem kann die Baufolie an eine bereits im Dachbereich verlegte Gebäudehülle und/oder einen Baukörper angeordnet werden. Insbesondere wird die Baufolie in der Bauwirtschaft und/oder der Bautechnik verwendet. Darüber hinaus kann die Baufolie unterhalb, der Witterungsseite abgewandt, einer Begrünung und/oder eines Pflanzsubstrat und/oder einer Schüttung, insbesondere Kiesschüttung, und/oder an einer Dampfbremse angeordnet sein, insbesondere dem Innenraum eines Gebäudes zugewandt, und/oder als Fassadenbekleidung eingesetzt werden.

Des Weiteren kann die erfindungsgemäße Baufolie auch in Kombination mit einer Dachbahn, Dachfolie, Flachdachbahn, Fassadenbahn, Dampfbremse und/oder Unterdachbahn, insbesondere Unterdeck- bzw. und/oder Unterspannbahn, verwendet werden. Dabei kann die Baufolie an die vorgenannten Bahnen angeordnet und/oder fest mit diesen verbunden sein.

Bei Flachdächern ist es wesentlich, eine Wasser- und Winddichtigkeit unter der Abdichtungsebene und/oder der Hartbedachung und/oder der Fassadenverkleidung und/oder der Dachverkleidung sicherzustellen. Hierzu werden in der Regel wasser- und winddichte Bahnen und/oder eine solche Abdichtungsebene eingesetzt, die aus einer Mehrzahl von Streifen der Bahnen hergestellt wird. Zur Herstellung dieser Abdichtungsebene werden die Bahnen als Bahnenware als Streifen auf dem Dach und/oder entlang einer Fassade, insbesondere in Art als Bestandteil einer Gebäudehülle, befestigt. Die einzelnen Reihen der Baufolienstreifen werden miteinander, insbesondere über eine Klebeverbindung, verbunden oder miteinander verschweißt. Durch die Verbindung der einzelnen Bahnstreifen wird versucht, die notwendige Dichtigkeit der Abdichtungsebene zu gewährleisten.

Aufgrund von Verlegefehlern, aber auch bei Beschädigung der Abdichtungsebene kann es zu Undichtigkeiten kommen. Problematisch ist in diesem Zusammenhang, dass die Gebäudehülle und/oder die Fassadenverkleidung und/oder die Abdichtungsebene bzw. die einzelnen miteinander verbundenen Bahnstreifen im verlegten Zustand nicht ohne Weiteres sichtbar sind, da sie sich in der Regel zwischen der äußeren Verkleidung und einer weiteren Schicht, insbesondere eine Dämmplatte und/oder Kiesschüttungsschicht und/oder Innenverkleidungsplatten, insbesondere Decken-, Wand- und/oder Bodenverkleidung, befinden.

Dringt Feuchtigkeit über die Gebäudehülle und/oder die Abdichtungsebene, insbesondere bei einem Leck, ein, ist der Zeitraum, bis der Schaden erkannt wird, üblicherweise sehr lang. Eine vorhandene erhöhte Feuchtigkeit kann demzufolge unbemerkt Schäden verursachen, die zumeist dann bemerkt werden, wenn das Schadensbild, insbesondere im Inneren des Gebäudes, sichtbar wird. Ein aufgrund von erhöhter Feuchtigkeit hervorgerufener Schaden kann beispielsweise ein Wasserfleck an einer Wand im Innenraum eines Gebäudes sein. Ein derartiger Wasserfleck gibt dann Anlass zur Reparatur, wobei häufig weit mehr Bereiche geschädigt sind als nur die den Wasserfleck aufweisende Wand. Zur Schadensbehebung muss aufwendig die Gebäudehülle zumindest bereichsweise freigelegt werden, um das Leck zu finden. Dies ist üblicherweise mit einem sehr hohen Aufwand und einhergehend mit sehr hohen Kosten verbunden.

Grundsätzlich ist es in der Praxis bekannt, ein Überwachungssystem mit Feuchtesensoren für die Bedachung vorzusehen. Die im Stand der Technik bekannten Feuchtesensoren sind jedoch vergleichsweise fehleranfällig und insbesondere nicht für einen langfristigen Einsatz im Dachbereich geeignet. Darüber hinaus ist die Integration von im Stand der Technik bekannten Feuchtesensoren in eine Baufolie mit einem vergleichsweise großen Kostenaufwand verbunden.

Unter Berücksichtigung des Kosten-Nutzen-Verhältnisses wird in der Praxis meist von einer Überwachung der Feuchtigkeit in der Gebäudehülle und/oder der Unterbedachung abgesehen. Letztlich wird ein zu spätes Erkennen eines Wasserschadens in Anbetracht der Kosten für eine ständige bzw. dauerhafte Überwachung und insbesondere der Kosten für die Bereitstellung des Feuchtesensors an der Baufolie in Kauf genommen.

Die WO 84/03768 A1 betrifft ein Frühwarnsystem zur frühzeitigen Erkennung und Lokalisierung von undichten Stellen auf Dächern.

Die DE 10 2019 000 605 B3 betrifft eine Verwendung einer Sensorsystemanordnung im Baubereich und/oder Baugewerbe, wobei die Sensorsystemanordnung wenigstens ein Sensorelement zur Detektion wenigstens einer physikalischen und/oder chemischen Größe und/oder zur Detektion des stofflichen Beschaffenheit seiner Umgebung und eine elektrische Energieversorgungseinrichtung aufweist.

Die WO 2019/244164 A1 betrifft eine wasserdichte Membran mit einem Leckagedetektorsystem.

Aufgabe der vorliegenden Erfindung ist es nun, die vorgenannten Nachteile des Standes der Technik zu vermeiden oder aber zumindest im Wesentlichen zu reduzieren.

Die vorgenannte Aufgabe ist erfindungsgemäß durch eine Baufolie mit einem eine Trägerschicht und eine Textilschicht aufweisenden mehrlagigen Schichtaufbau gelöst, wobei auf die Außenseite der Trägerschicht eine wenigstens einen Feuchtesensor aufweisende Elektronikeinheit aufgedruckt ist. Die Textilschicht ist wasserdurchlässig, vorzugsweise wasseraufnehmend, wobei die Elektronikeinheit zwischen der Trägerschicht und der Textilschicht vorgesehen ist. Der Feuchtesensor ist im unmittelbaren Kontakt mit der Textilschicht, insbesondere wobei der Feuchtesensor, vorzugsweise unmittelbar, an der Textilschicht angeordnet ist.

Erfindungsgemäß gelingt es, einen gedruckten Feuchtesensor bereitzustellen. So wird insbesondere ermöglicht, die Herstellungskosten für eine erfindungsgemäße Baufolie im Vergleich zum Stand der Technik drastisch zu reduzieren, da der Feuchtesensor letztlich während der Herstellung der Baufolie, vorzugsweise im Inline-Verfahren, hergestellt werden kann. Insbesondere kann der Feuchtesensor gemeinsam mit den weiteren Bestandteilen der Elektronikeinheit auf die Trägerschicht aufgedruckt werden.

Vorteilhafterweise kann mit der erfindungsgemäßen Baufolie unter wirtschaftlichen Gesichtspunkten, insbesondere im Flachdachbereich, eine Überwachung der Feuchtigkeit im Dachaufbau sichergestellt werden. So kann rechtzeitig das unerwünschte Eindringen von Feuchtigkeit im Dachaufbau erkannt werden, so dass insbesondere langfristige Schäden aufgrund eines Wasserschadens verhindert werden können.

Dadurch, dass der erfindungsgemäße Feuchtesensor gedruckt wird, kann eine Mehrzahl von Feuchtesensoren über die Länge der Baufolie mit geringen Herstellungskosten bereitgestellt werden. Dies ermöglicht eine vergleichsweise genaue Detektion eines Lecks, da die Stelle des Eindringens von Wasser über die Bestimmung des die Feuchtigkeit detektierenden Feuchtesensors bestimmbar ist.

Die Trägerschicht gewährleistet, dass der Feuchtesensor auch Feuchtigkeit der näheren Umgebung detektieren kann, da insbesondere ein Feuchtetransport entlang der Textilschicht ermöglicht wird. Der Feuchtesensor steht dabei derart in Kontakt mit der Textilschicht, dass die Feuchtigkeit lokalisiert werden kann. So gelingt es erfindungsgemäß, dass über die flächige Abdeckung mit der Textilschicht eine Detektion der Feuchtigkeit am Feuchtesensor sichergestellt werden kann.

Darüber hinaus kann durch den gedruckten Feuchtesensor eine vergleichsweise geringe Aufbauhöhe der Elektronikeinheit erreicht werden, insbesondere wobei die Elektronikeinheit eine Höhe zwischen 0,1 mm bis 2 cm, bevorzugt zwischen 1 mm bis 1 cm, weiter bevorzugt zwischen 2 mm bis 5 mm, aufweist. Durch die vergleichsweise geringe Aufbauhöhe kann darüber hinaus eine störungsfreie Verlegung weiterer Schichten über der Baufolie ermöglicht werden, so dass insbesondere keine störenden Reliefkonturen der Elektronikeinheit vorhanden sind.

Des Weiteren weist die erfindungsgemäße Elektronikeinheit eine hohe mechanische Stabilität auf, insbesondere wobei die Elektronikeinheit auch aufrollbar und/oder knickbar ausgebildet ist, was insbesondere eine einfache Verlegung der Baufolie ermöglicht.

Erfindungsgemäß ist vorgesehen, dass der Feuchtesensor als resistiver Feuchtesensor ausgebildet ist. Zusätzlich kann auch vorgesehen sein, dass der Feuchtesensor als kapazitiver Feuchtesensor ausgebildet ist.

Vorzugsweise ist der resistive Feuchtesensor durch wenigstens zwei benachbarte elektrisch leitfähige Messleiterbahnen zur resistiven Feuchtemessung gebildet. Zwischen den wenigstens zwei elektrisch leitfähigen Messleiterbahnen kann wenigstens eine Wasserleitung vorgesehen sein. Dadurch, dass Wasser bzw. Feuchtigkeit in der Wasserleitung zwischen den elektrisch leitfähigen Messleiterbahnen vorhanden ist, gelingt es, den elektrischen Widerstand derart zu beeinflussen, dass über den Feuchtesensor eine Detektion von Feuchtigkeit erfolgen kann. In diesem Zusammenhang kann erfindungsgemäß das physikalische Prinzip ausgenutzt werden, dass sich der elektrische Widerstand beim Eindringen von Wasser und/oder Feuchtigkeit in einer Wasserleitung - die zwischen zwei unmittelbar benachbarten Messleiterbahnen gebildet wird - verändert. Somit wird die Veränderung des ohmschen Widerstandes zum Detektieren der Feuchtigkeit verwendet.

Darüber hinaus ist bei einer weiteren bevorzugten Ausgestaltung des Erfindungsgedankens vorgesehen, dass die wenigstens zwei Messleiterbahnen des Feuchtesensors miteinander kämmen. Alternativ oder zusätzlich kann vorgesehen sein, dass die wenigstens zwei Messleiterbahnen des Feuchtesensors jeweils eine Mehrzahl von abstehenden Fingern aufweisen, wobei, vorzugsweise, die Finger der Messleiterbahnen ineinandergreifen und/oder miteinander kämmen können. Insbesondere kann zwischen zwei unmittelbar benachbarten Fingern der Messleiterbahnen die wenigstens eine Wasserleitung zur resistiven Feuchtemessung ausgebildet werden. So kann insbesondere ein zumindest im Wesentlichen labyrinthartige Struktur des Feuchtesensors erhalten werden.

Insbesondere ist der Feuchtesensor als ein gerundetes, insbesondere zumindest im Wesentlichen kreisförmiges, Sensorfeld ausgebildet. Aber auch andere Formen des Sensorfeldes sind möglich. Jedenfalls sollte gewährleistet sein, dass die wenigstens zwei Messleiterbahnen miteinander kämmend in einem Sensorfeld angeordnet sind.

Vorzugsweise ist der Feuchtesensor mit wenigstens einer Leiterbahn der Elektronikeinheit, vorzugsweise mit wenigstens zwei Leiterbahnen, insbesondere zwischen drei bis acht Leiterbahnen, verbunden. Insbesondere ist wenigstens eine Messleiterbahn mit wenigstens einer Leiterbahn der Elektronikeinheit elektrisch verbunden, wobei alternativ oder zusätzlich wenigstens eine weitere Messleiterbahn mit wenigstens einer, bevorzugt mit wenigstens zwei, weiter bevorzugt zwischen drei bis acht, Leiterbahnen elektrisch verbunden sein kann. Insbesondere kann eine Messleiterbahn mit einer Leiterbahn und eine weitere Messleiterbahn mit einer Mehrzahl von Leiterbahnen verbunden sein, insbesondere so dass über die miteinander kämmenden Messleiterbahnen die resistive Feuchtemessung sichergestellt werden kann.

Insbesondere ist die Trägerschicht als, vorzugsweise wasserdichte, Folienschicht ausgebildet. Die Trägerschicht kann als Material einen Kunststoff, vorzugsweise einen thermoplastischen Kunststoff, weiter bevorzugt Polypropylen, Polyethylen und/oder Polyethylenterephthalat (PET), aufweisen und/oder daraus bestehen. Insbesondere ist die Trägerschicht als PET-Folie ausgebildet.

Ferner kann die Trägerschicht alternativ oder zusätzlich diffusionsoffen, insbesondere wasserdampfdurchlässig, und/oder wasserdicht und/oder atmungsaktiv ausgebildet sein. Alternativ oder zusätzlich kann vorgesehen sein, dass die Trägerschicht diffusionsdicht, diffusionshemmend, wasserdampfundurchlässig und/oder wasserdicht ausgebildet ist. Die Ausbildung der Trägerschicht kann insbesondere in Abhängigkeit des Einsatzortes und/oder der Ausbildung der Baufolie erfolgen. Beispielsweise kann die Baufolie an Bahnen einer Gebäudehülle angeordnet werden. In Abhängigkeit der diesbezüglichen Anordnung kann die Trägerschicht entweder diffusionsoffen oder diffusionsdurchlässig ausgebildet sein. Insbesondere ist die Trägerschicht so ausgebildet, dass der Feuchtesensor über den Feuchtetransport längs der Textilschicht das Eindringen von ungewünschter Feuchtigkeit detektieren kann.

Zudem kann die, bevorzugt als Vliesschicht ausgebildete, Textilschicht insbesondere hydrophile Fasern - das heißt insbesondere wasseraufnehmende Fasern - aufweisen. Insbesondere kann die Textilschicht aus hydrophilen Fasern, die insbesondere Polyethylenterephthalat (PET) aufweisen, aufgebaut sein. Alternativ oder zusätzlich kann vorgesehen sein, dass die Fasern der Textilschicht eine hydrophile Beschichtung aufweisen, insbesondere wobei die Fasern als Material Polyethylenterephthalat (PET) aufweisen und/oder daraus bestehen. Die hydrophile Beschichtung kann demzufolge sicherstellen, dass ein wirksamer Feuchtetransport längs der Textilschicht gewährleistet werden kann.

Durch die hydrophile Ausbildung der Textilschicht wird insbesondere ermöglicht, dass der Feuchtetransport und/oder der Wassertransport längs der Textilschicht im Vergleich zu im Stande der Technik bekannten Fliesen verbessert werden kann. So kann auch die erfindungsgemäße Detektion von Feuchtigkeit und/oder Wasser dahingehend verbessert werden, dass bereits eine geringe Menge von Feuchtigkeit und/oder Wasser, die an der Textilschicht anliegt, von dem erfindungsgemäßen Feuchtesensor erkannt werden kann.

Bei einer weiteren bevorzugten Ausführungsform kann vorgesehen sein, dass die Textilschicht als Vliesschicht, bevorzugt als thermisch verfestigte und/oder nadel- und/oder nassstrahlverfestigte Vliesschicht, ausgebildet ist. Ferner kann die Textilschicht alternativ oder zusätzlich ein polyolefinisches Vlies, ein Naturfaservlies, ein Polypropylen-Spinnvlies, ein Polyamid-Vlies, ein Polylactide-Vlies (PLA-Vlies) und/oder ein Polyethylenterephthalat-Vlies aufweisen und/oder als Stapelvlies und/oder als engmaschiges Gewirke hergestellt sein.

Ferner ist bei einer weiteren bevorzugten Ausführungsform der vorliegenden Erfindung vorgesehen, dass eine Mehrzahl von insbesondere gleich beabstandeten Feuchtesensoren längs der Länge der Baufolie vorhanden ist. Insbesondere können unmittelbar benachbarte Feuchtesensoren einen Abstand zwischen 10 cm bis 5 m, bevorzugt zwischen 20 cm bis 3 m, weiter bevorzugt zwischen 40 cm bis 1,5 m, aufweisen. Alternativ oder zusätzlich kann vorgesehen sein, dass der Abstand unmittelbar benachbarter Feuchtesensoren wenigstens 5 cm, bevorzugt wenigstens 10 cm, weiter bevorzugt wenigstens 20 cm und/oder kleiner als 5 m, bevorzugt kleiner als 3 m, weiter bevorzugt kleiner als 1,5 m, ausgebildet ist. Der Abstand der Feuchtesensoren kann insbesondere von der gewünschten Genauigkeit der Lokalisation eines möglichen Lecks in dem Dachaufbau abhängig sein. Je engmaschiger die Feuchtesensoren angeordnet sind, desto genauer kann ein Leck erkannt werden. Erfindungsgemäß gelingt es jedoch auch bei einem größeren Abstand unmittelbar benachbarter Feuchtesensoren zumindest im Wesentlichen sicher, das Eindringen von Feuchtigkeit im Bereich der Baufolie zu detektieren, indem der Feuchtetransport längs der Textilschicht genutzt werden kann.

Bei einer weiteren bevorzugten Ausführungsform ist vorgesehen, dass der, insbesondere minimale, Abstand unmittelbar benachbarter Finger des Sensorfeldes und/oder die, insbesondere maximale, Breite wenigstens einer zwischen den wenigstens zwei Messleiterbahnen gebildeten Wasserleitung weniger als 1 cm, bevorzugt weniger als 0,5 cm, weiter bevorzugt weniger als 0,3 cm, vorzugsweise zwischen 1 mm bis 10 mm, beträgt. Letztlich kann auch die Breite zwischen den unmittelbar benachbarten Fingern der Messleiterbahnen variieren. Insbesondere ist der Abstand derart gewählt, dass die resistive Feuchtemessung bei Eindringen von Feuchtigkeit und/oder Wasser in die Wasserleitung durch die Veränderung des ohmschen Widerstandes von dem Feuchtesensor detektiert werden kann.

Bei einer weiteren bevorzugten Ausgestaltung der Erfindung ist vorgesehen, dass die Breite der Trägerschicht nicht der Breite der Textilschicht entsprechen muss. So kann sich die Trägerschicht letztlich nur über einen Teil der Breite der Textilschicht erstrecken. Insbesondere ist jedoch vorgesehen, dass die Trägerschicht und die Textilschicht eine langgestreckte Form und insbesondere die gleiche Länge aufweisen.

Vorzugsweise erstreckt sich die Breite der Trägerschicht über wenigstens 3 %, bevorzugt zwischen 3 % bis 50 %, weiter bevorzugt zwischen 5 % bis 25 % und insbesondere zwischen 8 % bis 16 %, der Breite der Textilschicht.

Ferner kann die an der Textilschicht angeordnete Trägerschicht zu den Außenrändern der Textilschicht beabstandet sein. Insbesondere kann die Trägerschicht mittig an der Textilschicht angeordnet sein, so dass sich vorzugsweise eine zumindest im Wesentlichen gleiche Beabstandung zu den jeweiligen Außenrändern der Textilschicht ergibt.

Besonders bevorzugt ist, dass die Außenränder der Trägerschicht und der Textilschicht zumindest im Wesentlichen parallel zueinander verlaufen. Alternativ oder zusätzlich kann vorgesehen sein, dass die Längsachse der Trägerschicht zumindest im Wesentlichen parallel zu der Längsachse der Textilschicht verläuft.

Bei einer weiteren bevorzugten Ausführungsform ist vorgesehen, dass der Schichtaufbau wenigstens eine weitere Schicht zur Ausbildung der Baufolie als Dachbahn, Dachfolie, Flachdachbahn, Fassadenbahn und/oder Dampfbremse und/oder Unterdachbahn, insbesondere Unterdeck- und/oder Unterspannbahn, aufweist. Die wenigstens eine weitere Schicht kann insbesondere als Funktionsschicht ausgebildet sein. Die wenigstens eine weitere Schicht kann sich insbesondere über die Breite der Trägerschicht und/oder über die Breite der Textilschicht erstrecken.

Insbesondere ist vorgesehen, dass die weitere Schicht an der der Textilschicht gegenüberliegenden Seite der Baufolie angeordnet ist. Alternativ oder zusätzlich kann die weitere Schicht auch an der der Elektronikeinheit abgewandten Seite der Trägerschicht angeordnet sein. Die weitere Schicht kann diffusionsdicht, diffusionshemmend, wasserdampfdurchlässig und/oder wasserdicht ausgebildet sein. Letztlich ist die weitere Schicht insbesondere in Abhängigkeit der Ausbildung der Baufolie als Dachbahn, insbesondere Flachdachbahn, ausgewählt. Ist die Baufolie als Flachdachbahn ausgebildet, wird insbesondere bevorzugt, dass die weitere Schicht als Funktionsschicht diffusionsdicht und/oder diffusionsperrend ausgebildet ist.

Darüber hinaus ist bei einer weiteren bevorzugten Ausführungsform vorgesehen, dass die Trägerschicht eine Breite zwischen 1 bis 100 cm, bevorzugt zwischen 10 bis 50 cm, weiter bevorzugt zwischen 13 bis 20 cm, aufweist. Alternativ oder zusätzlich kann vorgesehen sein, dass die Textilschicht eine Breite zwischen 0,5 bis 3 m, bevorzugt zwischen 1 bis 2 m, aufweist. Vorzugsweise haben die Trägerschicht und die Textilschicht die gleiche Länge und/oder verlaufen beide in Längsrichtung und/oder sind langgestreckt ausgebildet. Die Länge der Baufolie und/oder der Trägerschicht und/oder der Textilschicht kann zwischen 1 m bis 50 m, bevorzugt zwischen 1,5 m bis 10 m, betragen.

Bei einer weiteren bevorzugten Ausführungsform ist vorgesehen, dass der Schichtaufbau eine weitere Textilschicht, insbesondere eine Vliesschicht, aufweist. Die weitere Textilschicht kann an der der Textilschicht gegenüberliegenden Seite der Baufolie angeordnet sein. Alternativ oder zusätzlich kann vorgesehen sein, dass die weitere Textilschicht an der der Elektronikeinheit abgewandten Seite der Trägerschicht angeordnet ist. Durch die weitere Textilschicht kann insbesondere die mechanische Stabilität der Baufolie verbessert werden.

Des Weiteren kann vorgesehen sein, dass der Schichtaufbau zweischichtig ausgebildet ist und aus der Trägerschicht und der Textilschicht besteht. So kann ein vergleichsweise einfacher Aufbau der Baufolie vorgesehen sein, mit dem insbesondere bereits verlegte Bahnen und/oder zu verlegende Bahnen einer Gebäudehülle und/oder einer Unterbedachung mit einem Überwachungssystem zur Feuchteüberwachung ausgestattet werden können.

Darüber hinaus betrifft die vorliegende Erfindung eine Verwendung wenigstens einer Baufolie nach einem der vorhergehenden Ausführungsformen, vorzugsweise im Dachaufbau, als wenistens einen Durchbruch der Baufolie aufweisendes Durchbruchselement. Insbesondere ist das Durchbruchselement zur Feuchteüberwachung und/oder zum Umschließen von wenigstens einem zumindest abschnittsweise durch den Durchbruch geführten und/oder im Durchbruch angeordneten Durchbruchskörper. Insbesondere ist als Durchbruchskörper ein Flachdachdurchbruchskörper vorgesehen bzw. das Durchbruchselement wird im Flachdachaufbau verwendet. Als Durchbruchskörper kann ein Ablauf, insbesondere ein Gulli und/oder ein Flachdachablauf, vorgesehen sein. Alternativ oder zusätzlich ist es auch möglich, dass der Durchbruchskörper durch einen Lüfter, insbesondere ein Lüftungsrohr, vorzugsweise für den Flachdachbereich, gebildet wird.

Neben der Verwendung der Baufolie als Durchbruchselement kann besonders bevorzugt auch vorgesehen sein, dass die Baufolie und/oder das Durchbruchselement für Detailausbildungen, vorzugsweise im Dachbereich, eingesetzt wird. Insbesondere dient die Baufolie dann im Bereich der Detailausbildung zur Feuchteüberwachung im Dachaufbau. Unter Detailausbildungen sind insbesondere Anschlüsse, insbesondere Dach-, Wand-, Tür-, Fenster- und/oder Dachrandabschlüsse, zu verstehen.

Vorzugsweise kann das Durchbruchselement als Manschettenelement zum Umschließen des Durchbruchskörpers und insbesondere zum Abdichten des Durchbruchskörpers angesehen werden.

Der Verwendung der Baufolie als Durchbruchselement kommt insbesondere eigene erfinderische Bedeutung zu. So lässt sich die erfindungsgemäße Baufolie besonders vorteilhaft als Durchbruchselement einsetzen, da der in der Baufolie integrierte Feuchtesensor insbesondere eine zeitnah sowie zuverlässige Detektion des Eindringens von Feuchtigkeit gewährleisten kann. Gerade im Bereich von Durchbrüchen, die für Durchbruchskörper verwendet werden, sind Stellen im Dachaufbau gegeben, die dazu führen könnten, dass Feuchtigkeit in den Dachaufbau eindringt, was jedoch zu vermeiden ist. Durch die Ausbildung des Feuchtesensors auf der Baufolie gelingt es nun, die Baufolie im Bereich des Durchbruchskörpers als Durchbruchselement einzusetzen und somit insbesondere festzustellen, ob eine korrekte Abdichtung für das Durchbruchselement und somit für den gesamten Dachaufbau gewährleistet wird. Demnach können gerade die kritischen Schwachstellen im Dachaufbau, insbesondere langfristig, überwacht werden.

Der Durchbruchskörper kann unterschiedliche Formen aufweisen, so sind sowohl "runde" Lüfter als auch "runde" Gullis denkbar - also solche die einen zumindest im Wesentlichen kreisförmigen Querschnitt aufweisen -, aber auch rechteckige Durchdringungen, wie beispielsweise Lichtkuppeln oder dergleichen, können durch das erfindungsgemäße Durchbruchselement abgedichtet und/oder überwacht werden und somit in dem Dachaufbau angeordnet werden.

In diesem Zusammenhang versteht es sich, dass die vorgenannten Ausführungen zu Vorteilen, bevorzugten Ausführungsformen und dergleichen zu der Baufolie in gleicher Weise auch für die erfindungsgemäße Verwendung der Baufolie als Durchbruchselement gelten können, insbesondere ohne dass dies einer weiteren Erläuterung bedarf.

Das Durchbruchselement kann unterschiedliche Formen aufweisen, so sind sowohl langgestreckte Durchbruchselemente als auch rechteckförmige Durchbruchselemente, insbesondere quadratische Durchbruchselemente - zumindest im Querschnitt gesehen - möglich.

Bei einer besonders bevorzugten Ausführungsform ist vorgesehen, dass der wenigstens eine Feuchtesensor benachbart zum Durchbruch der Baufolie angeordnet ist. Insbesondere ist der Feuchtesensor zum Durchbruch mit wenigstens 0,5 cm, bevorzugt wenigstens 1 cm, weiter bevorzugt zwischen 2 cm bis 100 cm, beabstandet. Insbesondere sind wenigstens 2, bevorzugt wenigstens 3, vorzugsweise zwischen 3 bis 20, weiter bevorzugt zwischen 4 bis 8, Feuchtesensoren benachbart zum Durchbruch angeordnet und insbesondere über Leiterbahnen elektrisch miteinander verbunden. Unmittelbar benachbarte Feuchtesensoren können darüber hinaus auch zueinander beabstandet sein, insbesondere wobei der Abstand zwischen unmittelbar benachbarten Feuchtesensoren zwischen 1 cm bis 200 cm, bevorzugt zwischen 2 cm bis 50 cm, beträgt. Über die Mehrzahl der Feuchtesensoren gelingt es, ein engmaschiges Überwachungsnetz (um den Durchbruch herum) zu gewährleisten, so dass insbesondere zeitnah bei einem undichten Durchbruchselement das Eindringen von Wasser detektiert werden kann. Demnach können frühzeitig möglicherweise entstehende Bauschäden aufgrund des Eindringens von Feuchtigkeit verhindert werden, da eine Lokalisation der undichten Stelle erfolgen kann.

Vorzugsweise sind die Leiterbahnen, die die Feuchtesensoren miteinander verbinden, um den Durchbruch herum angeordnet. Insbesondere durchbricht der Durchbruch weder die Leiterbahnen noch die Feuchtesensoren. Somit kann ein Durchbruchselement bereitgestellt werden, dass, bevorzugt im mittigen Bereich, die Möglichkeit der Anordnung eines Durchbruches oder den Durchbruch selbst aufweist, wobei sichergestellt werden kann, dass der Durchbruch nicht die Stromführung der Leiterbahnen beeinträchtigt. Beispielsweise kann ein Bereich vorgegeben sein, der zur Bildung des Durchbruches beim Anwender eingeschnitten und/oder eingestanzt werden kann, so dass der Durchbruch der Baufolie ausgebildet werden kann. Demnach kann der Durchbruch auch anwenderseitig eingebracht werden, wodurch eine hohe Flexibilität und/oder Anpassbarkeit des erfindungsgemäßen Durchbruchselementes im Hinblick auf unterschiedliche Außenabmessungen des Durchbruchkörpers sichergestellt werden kann. Das ermöglicht es auch, dass das Durchbruchselement möglichst eng an den Durchbruchskörper angeordnet werden kann.

Erfindungsgemäß kann in einer bevorzugten Ausführungsform eine Abdichtungsfunktion durch das Durchbruchselement selbst bereitgestellt werden. Es kann aber auch vorgesehen sein, dass weitere Baufolienabschnitte, Abdichtbahnen oder dergleichen mit dem Durchbruchskörper zur Abdichtung des Durchbruchskörpers im Dachaufbau miteinander verbunden sind. Letztlich kann das erfindungsgemäße Durchbruchselement einen Sensorbereich bereitstellen, der das Eindringen von Feuchtigkeit in den abgedichteten Bereich feststellen kann. Demgemäß kann vorgesehen sein, dass das Durchbruchselement als solches in dem bereits abgedichteten Bereich - das heißt beispielsweise der Witterungsseite abgewandt unter der Abdichtungsfolie bzw. dem weiteren Baufolienabschnitt - angeordnet sein kann.

In weiteren Ausführungsformen kann auch vorgesehen sein, dass die Abdichtfunktion über die Baufolie selbst gewährleistet wird, insbesondere indem in der Baufolie die Trägerschicht wasserdicht ausgebildet ist und/oder indem wenigstens eine weitere Schicht vorgesehen ist, die zur Ausbildung der Baufolie als Dachbahn führt und letztlich die Abdichtfunktion sicherstellt, wie dies eingangs bereits erläutert worden ist.

Vorzugsweise weist die Trägerschicht einen ersten Durchbruch auf, der derart ausgebildet ist, dass er zumindest im Wesentlichen bündig mit dem Durchbruchskörper abschließt und/oder zumindest bereichsweise entlang der Außenseite des Durchbruchskörpers hochgeführt ist und vorzugsweise zumindest im Wesentlichen eng und/oder abdichtend an der Außenseite des Durchbruchskörpers anliegt. Es kann vorgesehen sein, dass die Trägerschicht mit der Außenseite des Durchbruchskörpers an den Rändern des ersten Durchbruches über ein Verbindungsmittel, beispielsweise eine Klebstoffverbindung oder dergleichen, verbunden ist.

Vorzugsweise weist die Textilschicht einen gegenüber dem ersten Durchbruch der Trägerschicht vergrößerten weiteren Durchbruch auf. Alternativ oder zusätzlich kann vorgesehen sein, dass die Textilschicht Einschnitte, bevorzugt einen Kreuzeinschnitt bzw. gekreuzte Einschnitte, aufweist. Die Einschnitte können insbesondere so ausgebildet sein, dass Vliesabschnitte entlang der Außenseite des Durchbruchskörpers hochgeführt sind. In weiteren Ausführungsformen kann auch vorgesehen sein, dass der weitere Durchbruch zumindest im Wesentlichen den Abmessungen des ersten Durchbruches entspricht. Grundsätzlich sind aber auch verschiedene Ausbildungen des ersten und des weiteren Durchbruches möglich. Der erste und der weitere Durchbruch bilden letztlich gemeinsam einen Durchbruch der Baufolie.

Wie zuvor erläutert, kann der Durchbruchskörper mit der Baufolie, insbesondere der Trägerschicht, verbindbar und/oder verklebbar sein. Die Verbindung kann insbesondere derart ausgebildet sein, dass eine Wasserdichtigkeit, eine Luftdichtigkeit und/oder eine Abdichtung gewährleistet werden kann. In diesem Zusammenhang versteht es sich, dass der Durchbruchskörper nicht Teil des Durchbruchselementes ist, jedoch mit dem Durchbruchselement verbunden werden kann. Sowohl der Durchbruchskörper als auch das Durchbruchselement können im Dachbereich angeordnet sein.

Der Durchbruchskörper kann unterschiedliche Abmessungen aufweisen. Besonders bevorzugt ist ein Flachdachdurchbruchskörper vorgesehen. Der Durchbruchskörper und/oder der wenigstens eine Durchbruch der Baufolie kann einen Durchmesser, insbesondere Außendurchmesser, von wenigstens 20 mm, bevorzugt wenigstens 40 mm, weiter bevorzugt zwischen 50 mm bis 100 mm, vorzugsweise zwischen 100 mm bis 300 mm, aufweisen. In diesem Zusammenhang versteht es sich, dass der Durchmesser insbesondere den maximalen Durchmesser angibt. Der Durchbruch kann, muss aber nicht, zumindest im Wesentlichen - im Querschnitt gesehen - kreisförmig ausgebildet sein.

Sofern der Durchbruchskörper eine zumindest im Wesentlichen rechteckförmige Querschnittsform aufweist, wie beispielsweise bei einer Lichtkuppel, kann vorgesehen sein, dass der Durchbruchskörper eine maximale Länge von wenigstens 1 m, bevorzugt zwischen 1 bis 2 m, aufweist. Alternativ oder zusätzlich kann vorgesehen sein, dass der Durchbruchskörper eine maximale Breite von wenigstens 1 m, bevorzugt zwischen 1 bis 2 m, aufweist.

Das Durchbruchselement kann auch mit weiteren Bahnen der Baufolie verbindbar sein, insbesondere über das nachfolgend noch beschriebene Verbindungssystem. Letztlich ist auch das Durchbruchselement eine Baufolie, die insbesondere gemäß dem zuvor und noch nachfolgendend beschriebenen bevorzugten Ausführungsformen ausgebildet sein kann. Das Durchbruchselement ist letztlich eine besonders vorteilhafte Einsatzmöglichkeit der erfindungsgemäßen Baufolie, der insbesondere eine eigenständige erfinderische Bedeutung zukommt, da diese spezielle Anwendung eine Vielzahl von Vorteilen ergibt.

Darüber hinaus ist bei einer weiteren bevorzugten Ausführungsform vorgesehen, dass das Durchbruchselement wenigstens zweiteilig ausgebildet ist. Insbesondere können auf jedem Bestandteil des Durchbruchselementes wenigstens ein Feuchtesensor angeordnet sein. Die Abschnitte bzw. Bestandteile des Durchbruchselementes können insbesondere elektrisch miteinander verbunden sein, insbesondere über ein noch nachfolgend zu beschreibendes Verbindungssystem. Somit kann das Durchbruchselement bevorzugt durch voneinander getrennte Abschnitte der Baufolie gebildet werden, die bevorzugt an dem Durchbruchselement angeordnet werden können. Eine solche Ausbildung ist insbesondere vorteilhaft für einen vergleichsweise großen Außendurchmesser - das heißt einen Außendurchmesser von über 1 m - aufweisende Durchbruchselemente. Somit kann die Überwachung des Eindringens von Feuchtigkeit bei größeren Durchbruchskörpers insbesondere durch eine mehrteilige Baufolie, die das Durchbruchselement bildet, bzw. einzelne Baufolienabschnitte zur Bildung des Durchbruchselementes gewährleistet werden.

Ferner betrifft die vorliegende Erfindung einen Dachaufbau, der insbesondere für ein Flachdach vorgesehen ist. Der Dachaufbau umfasst eine Baufolie und/oder ein Durchbruchselement nach einem der vorhergehenden Ausführungsformen, wobei - zumindest im Einbauzustand der Baufolie - der Feuchtesensor oberseitig, der Witterungsseite zugewandt, oder unterseitig, der Witterungsseite abgewandt, an der Baufolie angeordnet ist.

Im Hinblick auf bevorzugte Ausführungsformen und/oder Vorteile darf insbesondere auf die vorhergehenden Ausführungen zu der erfindungsgemäßen Baufolie verwiesen werden, die in gleicher Weise auch für den Dachaufbau gelten.

Durch den Dachaufbau wird insbesondere der Einbauort der Baufolie und die Ausrichtung des Feuchtesensors charakterisiert, wobei der Feuchtesensor in Abhängigkeit des Einbauortes an unterschiedlichen Stellen bzw. Außenseiten der Baufolie angeordnet sein kann. Insbesondere ist beim Einsatz der Baufolie im Flachdachbereich vorgesehen, dass der Feuchtesensor unterseitig der Baufolie angeordnet ist und insbesondere über den Kontakt mit der Textilschicht die Feuchtedetektion gewährleisten kann.

Bei einer weiteren bevorzugten Ausführungsform ist vorgesehen, dass die Trägerschicht wenigstens ein über die Außenseite der Trägerschicht überstehendes, mit der Elektronikeinheit elektrisch verbundenes erstes Verbindungsmittel aufweist. Das erste Verbindungsmittel kann insbesondere derart ausgebildet sein, dass die Elektronikeinheit über das erste Verbindungsmittel elektrisch mit einer externen Anschlusseinrichtung, vorzugsweise werkzeuglos, lösbar verbindbar und/oder elektrisch kontaktierbar ist.

Vorteilhafterweise kann so ein elektrischer Anschluss, beispielsweise zur Energieversorgung und/oder zur Datenübertragung, von externen Einrichtungen an die Elektronikeinheit ausgebildet werden, wobei die Elektronikeinheit insbesondere ein Überwachungssystem, vorzugsweise den Feuchtesensor, aufweisen kann.

Durch die werkzeuglose Verbindung über das erste Verbindungsmittel kann ein elektrischer Kontakt zu einer externen Anschlusseinrichtung mit einer einfachen Installation ermöglicht werden. Eine aufwendige Verkabelung der Elektronikeinheit zu weiteren Komponenten entlang des gesamten Dachsystems kann so vermieden werden. Die Anschlusseinrichtung wird bevorzugt an die Baufolie herangeführt und kann durch die werkzeuglose Verbindung den elektrischen Kontakt bereitstellen. Dies kann zur Energieversorgung der Elektronikeinheit genutzt werden.

Insbesondere kann die Baufolie an eine bestehende Gebäudehülle angegliedert werden und vorzugsweise zur Feuchteüberwachung und/oder Überwachung weiterer relevanter Zustandsgrößen genutzt werden. So kann in der Unterbedachung und/oder der Gebäudehülle vorgesehene Elektronik auf vergleichsweise einfache Art und Weise kontaktiert werden. Die sich ergebende drastische Vereinfachung ermöglicht einen wirtschaftlichen Einsatz von Elektronikkomponenten innerhalb der Unterbedachung.

Bevorzugt wird demzufolge eine elektrisch leitende Verbindung zwischen elektrischen Leitern bzw. Bauteilen unterschiedlicher Ausführungsart in Bauwerken werkzeuglos und insbesondere in flacher Bauform ermöglicht. Durch die lösbare Anbindung an das erste Verbindungsmittel können demzufolge einfache Methoden verwendet werden, die auch von wenig fachkundigem Personal unter gängigen Baustellenbedingungen durchgeführt werden können. Weiterhin kann die Verbindung zerstörungsfrei und reversibel getrennt werden, beispielsweise zu Wartungsarbeiten.

Darüber hinaus kann die benötigte Zeitdauer zum Anschluss der Elektronikeinheit innerhalb der Unterbedachung und/oder der Gebäudehülle deutlich reduziert werden.

Bei einer besonders bevorzugten Ausführungsform ist vorgesehen, dass das erste Verbindungsmittel als Verbindungsmittel eines komplementären, vorzugsweise zerstörungsfrei und/oder werkzeuglos lösbaren, Verbindungssystems ausgebildet ist. Als Verbindungssystem kann bevorzugt eine Druckknopfverbindung, eine druckknopfähnliche Verbindung, eine Klettverschlussverbindung und/oder eine Klebeverbindung vorgesehen sein. Das erste Verbindungsmittel kann demzufolge als sogenanntes männliches und/oder weibliches Verbindungsmittel des komplementären Verbindungssystems ausgebildet sein und mit dem zweiten Verbindungsmittel des Verbindungssystems, das an der externen Anschlusseinrichtung angeordnet sein kann, zusammenwirken. Dabei können das erste Verbindungsmittel und das zweite Verbindungsmittel der Anschlusseinrichtung, vorzugsweise werkzeuglos, lösbar zur elektrischen Verbindung und zur elektrischen Anbindung miteinander verbunden werden.

Die vorgenannten Verbindungssysteme ermöglichen ein eine insbesondere flache und/oder eine geringe Aufbauhöhe aufweisendes Verbindungssystem. Die geringe Aufbauhöhe zeichnet sich dadurch aus, dass die Elektronikeinheit im Dachbereich bzw. innerhalb einer Gebäudehülle eingesetzt wird, wobei am Einbauort ein möglichst flacher Aufbau aufgrund einer beschränkten Kapazität vorteilhaft ist. Das einfache Lösen wird durch die nahezu intuitiv verwendbaren Verbindungssysteme ermöglicht. Eine vergleichsweise schnelle Installation kann somit "Hand in Hand" mit einem reversibel lösbaren und insbesondere werkzeuglos lösbaren Verbindungssystem einhergehen.

Vorzugsweise steht das erste Verbindungsmittel zwischen 0,5 bis 15 mm, bevorzugt zwischen 1 bis 10 mm, weiter bevorzugt zwischen 2 bis 6 mm, über die Außenseite der Trägerschicht über. Das erste Verbindungsmittel kann ebenfalls über die Außenseite des Schichtaufbaus überstehen.

Besonders bevorzugt ist, dass die Elektronikeinheit auf die Außenseite der Trägerschicht aufgedruckt ist. Durch das Aufdrucken der Elektronikeinheit wird eine hohe Individualität, eine geringe Aufbauhöhe und/oder ein mit geringen Herstellungskosten verbundenes Herstellungsverfahren gewährleistet. Insbesondere erfolgt das Bedrucken der Trägerschicht mit der Elektronikeinheit während des Herstellungsprozesses der Baufolie, der insbesondere kontinuierlich als Inlineverfahren durchgeführt werden kann.

Ferner kann die Baufolie zwischen 1 bis 50, bevorzugt höchstens 30, weiter bevorzugt höchstens 20 und insbesondere zwischen 1 bis 20, erste Verbindungsmittel aufweisen. So kann beispielsweise je Leiterbahn und/oder je Sensor der Elektronikeinheit wenigstens ein erstes Verbindungsmittel zur elektrischen Anbindung vorgesehen sein. Alternativ oder zusätzlich kann auch vorgesehen sein, dass ein erstes Verbindungsmittel elektrisch mit wenigstens zwei Sensoren und/oder wenigstens zwei Leiterbahnen verbunden wird.

Eine elektrische Kontaktierung der in den Schichtaufbau der Baufolie eingefassten Elektronikeinheit wird insbesondere demzufolge über das erste Verbindungsmittel ermöglicht. Das erste Verbindungsmittel kann ebenfalls in weiteren Ausführungsformen über die Außenseite der Textilschicht überstehen.

Alternativ oder zusätzlich kann vorgesehen sein, dass die Textilschicht im Bereich des ersten Verbindungsmittels eine Ausnehmung aufweist. Diese Ausnehmung kann dazu dienen, um den Zugang zu dem ersten Verbindungsmittel von außen zu gewährleisten. So kann das erste Verbindungsmittel elektrisch von der externen Anschlusseinrichtung kontaktiert werden.

Darüber hinaus ist bei einer weiteren bevorzugten Ausführungsform vorgesehen, dass das erste Verbindungsmittel über die der Trägerschicht abgewandte Außenseite der Textilschicht übersteht. Letztlich wird ermöglicht, dass eine elektrische Kontaktierung des ersten Verbindungsmittels auch im Einbauzustand der Baufolie sichergestellt werden kann.

Insbesondere ist ein System mit wenigstens einer Baufolie nach einer der vorgenannten Ausführungsformen und wenigstens einer externen Anschlusseinrichtung zur elektrischen Kontaktierung des wenigstens einen ersten Verbindungsmittels der Baufolie vorgesehen. Die Anschlusseinrichtung weist insbesondere wenigstens ein komplementär zu dem ersten Verbindungsmittel ausgebildetes zweites Verbindungsmittel auf. Das erste und das zweite Verbindungsmittel sind, vorzugsweise werkzeuglos, lösbar miteinander verbindbar.

In diesem Zusammenhang versteht es sich, dass im Hinblick auf bevorzugte Ausführungsformen und Vorteile des erfindungsgemäßen Systems auf die vorhergehenden Ausführungen zu der erfindungsgemäßen Baufolie verwiesen werden darf, die in gleicher Weise auch für das erfindungsgemäße System gelten. Zur Vermeidung von Wiederholungen wird nachfolgend auf diesbezügliche Ausführungen verzichtet.

Das System ermöglicht insbesondere die Integration einer Elektronikeinheit in dem Dachaufbau, insbesondere im Bereich eines Flachdachs, und/oder im Bereich einer Gebäudehülle und insbesondere eine vergleichsweise einfache Art und Weise der elektrischen Kontaktierung der Elektronikeinheit. Über die werkzeuglos lösbare Verbindung kann eine einfache Installation am Verlegeort erfolgen. So kann die Anschlusseinrichtung den Kontakt zu weiteren externen elektrischen Komponenten ermöglichen.

Insbesondere ist vorgesehen, dass das erste und das zweite Verbindungsmittel im verbundenen Zustand eine geringe Aufbauhöhe aufweisen. Die Aufbauhöhe übersteigt insbesondere nicht 1 cm, bevorzugt ist die Aufbauhöhe kleiner oder gleich 0,5 cm, weiter bevorzugt kleiner oder gleich 0,25 cm.

Besonders bevorzugt ist vorgesehen, dass eine mit der Anschlusseinrichtung verbundene oder verbindbare Auswerteeinrichtung, vorzugsweise zur Auswertung der von dem Sensor der Elektronikeinheit erfassten Messergebnisse, vorgesehen ist. Die Auswerteeinrichtung kann unmittelbar oder mittelbar an die Anschlusseinrichtung angeschlossen werden. Alternativ oder zusätzlich kann eine mit der Anschlusseinrichtung verbundene oder verbindbare Energieversorgungseinrichtung vorgesehen sein. Über die Energieversorgungseinrichtung kann insbesondere die Energieversorgung der Elektronikeinheit sichergestellt werden.

Bei einer weiteren bevorzugten Ausgestaltung der vorliegenden Erfindung ist vorgesehen, dass die Anschlusseinrichtung wenigstens ein Leiterkabel und/oder wenigstens eine Anschlussleiterbahn zur elektrischen Verbindung mit dem zweiten Verbindungsmittel aufweist.

Vorzugsweise weist die Anschlusseinrichtung wenigstens ein Kontaktierungsmittel, vorzugsweise ein männliches oder weibliches Kontaktierungsmittel einer auszubildenden Steckverbindung, zum Anschluss weiterer elektrischer Komponenten, beispielsweise einer Energieversorgungseinrichtung oder dergleichen, auf. Das Kontaktierungsmittel kann mit dem zweiten Verbindungsmittel über wenigstens ein Leitungskabel elektrisch verbunden sein. Grundsätzlich unterscheidet man bei elektrischen Steckverbindungen zwischen dem männlichen Teil einer Steckverbindung, der insbesondere nach außen weisende Kontaktöffnungen aufweist, und dem weiblichen Teil, der insbesondere nach innen weisende Kontaktöffnungen aufweist. Letztlich kann also das erste Verbindungsmittel über das zweite Verbindungsmittel elektrisch in Verbindung mit einem Steckkontakt - nämlich dem Kontaktierungsmittel der Anschlusseinrichtung - gebracht werden. So wird insbesondere eine mittelbare Kontaktierung der Baufolie an eine Steckverbindung ermöglicht. So kann beispielsweise die Anschlusseinrichtung einen Abstand überbrücken, bis ein ausreichend großer Freiraum zur Anordnung der Steckverbindung erreicht wird. Beispielsweise kann das Kontaktierungsmittel der Anschlusseinrichtung im verlegten Zustand der Baufolie von außen frei zugänglich sein.

Bei einer weiteren ganz besonders bevorzugten Ausführungsform ist vorgesehen, dass die Anschlusseinrichtung an einer weiteren Baufolie vorgesehen ist. Insbesondere ist die Anschlusseinrichtung - vorzugsweise zur überlappenden Verlegung - an der Außenseite, die der das erste Verbindungsmittel aufweisenden Außenseite gegenüberliegt, der Trägerschicht angeordnet. Insbesondere ist die Anschlusseinrichtung der weiteren Baufolie elektrisch mit dem ersten Verbindungsmittel und/oder der Elektronikeinheit der weiteren Baufolie verbunden. Vorzugsweise gelingt es so, dass eine elektrische Verbindung zwischen zwei unmittelbar benachbarten Baufolien erreicht werden kann. So wird über die Verbindung zwischen dem ersten Verbindungsmittel der ersten Baufolie und dem zweiten Verbindungsmittel der Anschlusseinrichtung der weiteren Baufolie eine elektrische Kontaktierung der ersten Baufolie zu der weiteren Baufolie gewährleistet.

Vorzugsweise kann so eine elektrische Verbindung der Baufolien untereinander auf vergleichsweise einfache Art und Weise ermöglicht werden. So kann insbesondere eine vergleichsweise große Fläche des Dachaufbaus mit der Elektronikeinheit ausgestattet werden, wobei gleichzeitig eine wirtschaftliche Nutzung des gesamten Systems gegeben ist.

In diesem Zusammenhang versteht es sich, dass die Baufolie sowohl mit einer weiteren Baufolie über das erste Verbindungsmittel und ebenfalls mit einer Anschlusseinrichtung, die mit einer Auswerteeinrichtung verbunden sein kann, verbindbar ist. So kann die Baufolie letztlich mit wenigstens zwei Anschlusseinrichtungen verbunden werden, wobei jedoch nicht jede Anschlusseinrichtung in eine weitere Baufolie integriert sein muss. Insbesondere ist es bei einer derartigen elektrischen Verbindung der Baufolien erfindungsgemäß möglich, dass bei mehreren Baufolien wenigstens eine mit der Energieversorgungseinrichtung verbundenen Anschlusseinrichtung verbunden wird, wobei die Energieversorg der weiteren Baufolien über den elektrischen Kontakt der Baufolien untereinander ermöglicht wird.

Erfindungsgemäß gelingt es insbesondere, eine Verbindungsmethode bereitzustellen, die sowohl zur Verbindung der Baufolien untereinander als auch zur Verbindung von externen elektrischen Komponenten genutzt werden kann.

Besonders bevorzugt sind das erste und das zweite Verbindungsmittel formschlüssig, reibschlüssig, stoffschlüssig und/oder verrastbar lösbar miteinander verbindbar. Insbesondere erfolgt eine werkzeuglos lösbare Verbindung zwischen den Verbindungsmitteln. So kann insbesondere am Verlegeort der elektrische Kontakt mit einem geringen Aufwand hergestellt werden.

Bei einer weiteren bevorzugten Ausführungsform ist vorgesehen, dass das erste und zweite Verbindungsmittel ein komplementäres, vorzugsweise zerstörungsfrei und/oder werkzeuglos lösbares, Verbindungssystem ausbilden. Als Verbindungssystem kann in weiteren Ausführungsformen eine Druckknopfverbindung, eine druckknopfähnliche Verbindung, eine Klettverschlussverbindung und/oder eine Klebeverbindung vorgesehen sein. Die vorgenannten Verbindungsmöglichkeiten können insbesondere nahezu intuitiv verwendet werden. Durch die einfachen Verbindungstechniken können Verlegefehler oder Fehler bei der elektrischen Kontaktierung und der Inbetriebnahme der Elektronikeinheit vermieden werden.

Darüber hinaus ist bei einer weiteren bevorzugten Ausgestaltung vorgesehen, dass das zweite Verbindungsmittel in einem Gehäuse der Anschlusseinrichtung vorgesehen ist. Das Gehäuse der Anschlusseinrichtung kann insbesondere die elektrische Kontaktierung zwischen dem ersten Verbindungsmittel und dem zweiten Verbindungsmittel vereinfachen, insbesondere indem das Gehäuse als Widerlager wirken kann. So kann beispielsweise bei einem verwendeten Druckknopfverbindungssystem der Gegendruck, der beim Zusammenführen der Komponenten benötigt wird, über das Gehäuse ermöglicht werden. Vorzugsweise entsteht bei der Verbindung zwischen dem ersten Verbindungsmittel und dem zweiten Verbindungsmittel ein akustisches Geräusch, insbesondere ein sogenanntes "Klickgeräusch", das dem Verleger anzeigt, dass die Verbindung zwischen dem ersten und dem zweiten Verbindungsmittel erfolgt ist.

Die erfindungsgemäße Baufolie kann insbesondere derart hergestellt werden, dass zunächst die Trägerschicht mit der Elektronikeinheit bedruckt wird. Vorzugsweise kann im Anschluss die Trägerschicht mit der bedruckten Elektronikeinheit mit der Textilschicht kaschiert werden. Anschließend kann ein Ablängen der Baufolie in die einzelnen Baufolienabschnitte erfolgen.

Nachdem die einzelnen Baufolienabschnitte vorliegen, können die Verbindungsmittel, vorzugsweise das erste Verbindungsmittel, in die Baufolie integriert werden.

Im Zusammenhang mit der vorliegenden Erfindung versteht es sich, dass die Baufolie insbesondere sowohl das erste Verbindungsmittel als auch das zweite Verbindungsmittel aufweisen kann, insbesondere wenn die Baufolie mit mehreren Baufolien verbindbar ist. So kann die Baufolie das erste Verbindungsmittel zur elektrischen Verbindung mit einer Anschlusseinrichtung und gleichzeitig eine Anschlusseinrichtung, die mit einem ersten Verbindungsmittel einer weiteren Baufolie verbindbar ist, aufweisen.

Im Übrigen versteht es sich, dass in den vorgenannten Intervallen und Bereichsgrenzen jegliche Zwischenintervalle und Einzelwerte enthalten und als erfindungswesentlich offenbart anzusehen sind, auch wenn diese Zwischenintervalle und Einzelwerte nicht konkret angegeben sind.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung.

Es zeigt:
- Fig. 1: eine schematische perspektivische Darstellung einer Baufolie,
- Fig. 2: eine schematische perspektivische Querschnittsdarstellung einer weiteren Ausführungsform der Baufolie,
- Fig. 3: eine schematische Darstellung einer Anschlusseinrichtung,
- Fig. 4: eine schematische perspektivische Darstellung einer weiteren Ausführungsform der Baufolie,
- Fig. 5: eine schematische perspektivische Darstellung einer weiteren Ausführungsform der Anschlusseinrichtung,
- Fig. 6: eine schematische perspektivische Darstellung eines Systems,
- Fig. 7: eine schematische Querschnittsdarstellung einer erfindungsgemäßen Baufolie,
- Fig. 8: eine schematische Querschnittsdarstellung einer weiteren Ausführungsform der erfindungsgemäßen Baufolie,
- Fig. 9: eine schematische Draufsicht auf eine weitere Ausführungsform der erfindungsgemäßen Baufolie,
- Fig. 10: eine schematische Darstellung des Details A aus Fig. 9,
- Fig. 11: eine schematische perspektivische Darstellung einer weiteren Ausführungsform der Baufolie,
- Fig. 12: eine schematische perspektivische Darstellung einer weiteren Ausführungsform der Anschlusseinrichtung,
- Fig. 13: eine schematische perspektivische Darstellung einer weiteren Ausführungsform der Baufolie,
- Fig. 14: eine schematische perspektivische Darstellung einer weiteren Ausführungsform eines Systems,
- Fig. 15: eine schematische Draufsicht auf eine weitere Ausführungsform der erfindungsgemäßen Baufolie,
- Fig. 16: eine schematische perspektivische Darstellung einer weiteren Ausführungsform der Baufolie,
- Fig. 17: eine schematische Darstellung eines erfindungsgemäßen Durchbruchselementes,
- Fig. 18: eine schematische Darstellung einer weiteren Ausführungsform eines erfindungsgemäßen Durchbruchselementes,
- Fig. 19: eine schematische perspektivische Darstellung einer weiteren Ausführungsform eines erfindungsgemäßen Durchbruchselementes,
- Fig. 20: eine schematische perspektivische Darstellung einer weiteren Ausführungsform eines erfindungsgemäßen Durchbruchselementes,
- Fig. 21: eine schematische perspektivische Darstellung einer weiteren Ausführungsform eines erfindungsgemäßen Durchbruchselementes,
- Fig. 22: eine schematische perspektivische Darstellung einer weiteren Ausführungsform eines erfindungsgemäßen Durchbruchselementes und
- Fig. 23: eine schematische perspektivische Darstellung einer weiteren Ausführungsform eines erfindungsgemäßen Durchbruchselementes.

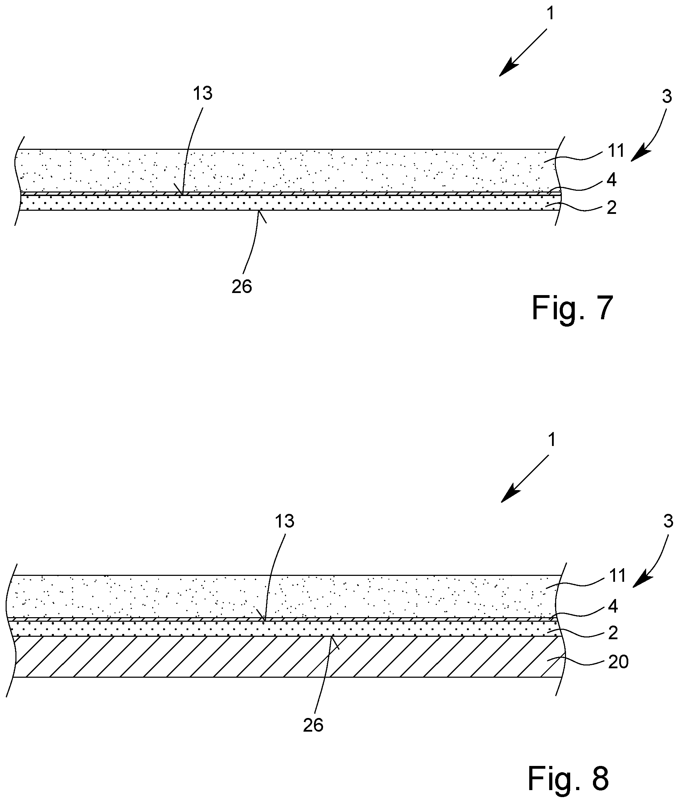

Fig. 7 zeigt eine Baufolie 1 mit einem mehrlagigen Schichtaufbau 3. Der Schichtaufbau 3 weist eine Trägerschicht 2 und eine Textilschicht 11 auf. Auf die Außenseite 13 der Trägerschicht 2 ist eine Elektronikeinheit 4 aufgedruckt.

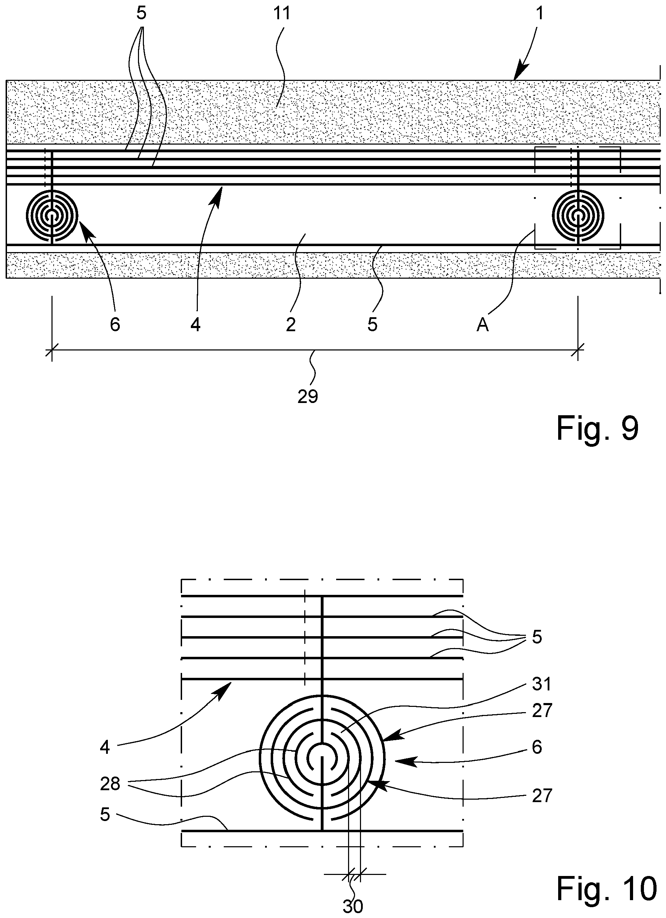

Fig. 9 zeigt, dass die aufgedruckte Elektronikeinheit 4 einen Feuchtesensor 6 aufweist.

Die in den Fig. 7 und 8 dargestellte Textilschicht 11 ist wasseraufnehmend und somit wasserdurchlässig ausgebildet. Die Elektronikeinheit 4 ist zwischen der Trägerschicht 2 und der hydrophilen Textilschicht 11 vorgesehen. Somit ist die Außenseite 13 der Textilschicht 11 zugewandt. Schematisch ist in Fig. 9 dargestellt, dass der Feuchtesensor 6 im unmittelbaren Kontakt mit der Textilschicht 11 steht. In Fig. 7 ist der Feuchtesensor 6 in der Elektronikeinheit 4 integriert und nicht näher dargestellt, wobei der Feuchtesensor 6 sowie die Elektronikeinheit 4 an der Textilschicht 11 angeordnet sind.

Fig. 10 zeigt das Detail A der Fig. 9. Der in Fig. 10 dargestellte Feuchtesensor 6 ist als resistiver Feuchtesensor 6 ausgebildet. Zur resistiven Feuchtemessung weist der Feuchtesensor 6 wenigstens zwei benachbarte elektrisch leitfähige Messleiterbahnen 27 auf. Die Messleiterbahnen 27 bilden im dargestellten Ausführungsbeispiel ein gerundetes, insbesondere zumindest im Wesentlichen kreisförmiges, Sensorfeld aus. Das dargestellte Sensorfeld ist zumindest im Wesentlichen labyrinthartig aufgebaut.

Fig. 10 zeigt weiter, dass die zwei Messleiterbahnen 27 des Feuchtesensors 6 miteinander kämmen. Zudem bilden die dargestellten Messleiterbahnen 27 eine Mehrzahl von abstehenden Fingern 28 aus. Die Finger 28 greifen im Ausführungsbeispiel der Fig. 10 ineinander und kämmen miteinander. Die Finger 28 sind darüber hinaus zumindest im Wesentlichen bogenabschnittsförmig, insbesondere kreisbogenabschnittsförmig, ausgebildet. Zwischen zwei unmittelbar benachbarten Fingern 28 wird eine Wasserleitung 31 ausgebildet.

Fig. 10 zeigt, dass die gebildeten Wasserleitungen 31 eine zumindest im Wesentlichen gerundete Form aufweisen und insbesondere zumindest im Wesentlichen kreisringabschnittsförmig ausgebildet sind. Eine Wasserleitung 31 kann dabei insbesondere die Form eines halben Kreisringes ausbilden.

Ferner zeigt Fig. 10, dass der Feuchtesensor 6 mit wenigstens einer Leiterbahn 5 der Elektronikeinheit 4 verbunden ist. Im dargestellten Ausführungsbeispiel ist der Feuchtesensor 6 mit einer Mehrzahl von Leiterbahnen 5 verbunden. In weiteren Ausführungsformen kann der Feuchtesensor 6 mit drei bis acht Leiterbahnen 5 verbunden sein.

Darüber hinaus zeigt Fig. 10, dass eine Messleiterbahn 27 (nämlich die untere Messleiterbahn 27) mit wenigstens einer Leiterbahn 5 - im dargestellten Ausführungsbeispiel mit genau einer Leiterbahn 5 - der Elektronikeinheit 4 elektrisch verbunden ist. Die weitere Messleiterbahn 27 (nämlich die obere Messleiterbahn 27) ist mit einer Mehrzahl von Leiterbahnen 5 verbunden. Im dargestellten Ausführungsbeispiel ist die obere Messleiterbahn 27 mit fünf Leiterbahnen 5 verbunden.

Die in Fig. 8 dargestellte Trägerschicht 2 ist wasserdicht ausgebildet. Die Trägerschicht 2 kann insbesondere als wasserdichte Folienschicht ausgebildet sein. Die Trägerschicht 2 kann ferner als Material einen Kunststoff, wie Polypropylen, Polyethylen und/oder Polyethylenterephthalat (PET), aufweisen und/oder daraus bestehen.

Nicht dargestellt ist, dass die Trägerschicht 2 in weiteren Ausführungsformen diffusionsoffen, insbesondere wasserdampfdurchlässig, und/oder atmungsaktiv ausgebildet ist.

In dem in Fig. 7 dargestellten Ausführungsbeispiel ist vorgesehen, dass die Trägerschicht 2 diffusionsdicht ausgebildet ist. In weiteren Ausführungsformen kann vorgesehen sein, dass die Trägerschicht 2 diffusionshemmend und/oder wasserdampfundurchlässig ausgebildet ist.

Nicht dargestellt ist, dass die Textilschicht 11 als Vliesschicht ausgebildet ist und insbesondere hydrophile Fasern aufweist. Als hydrophile Fasern können insbesondere Fasern vorgesehen sein, die als Material Polyethylenterephthalat (PET) aufweisen. Alternativ oder zusätzlich kann vorgesehen sein, dass die Fasern der Textilschicht 11 eine hydrophile Beschichtung aufweisen.

In Fig. 9 ist schematisch dargestellt, dass über die Länge der Baufolie 1 eine Mehrzahl von Feuchtesensoren 6 vorgesehen ist. In weiteren Ausführungsformen kann vorgesehen sein, dass die Feuchtesensoren 6 zueinander gleich beabstandet sind.

Der Abstand 29 zwischen zwei unmittelbar benachbarten Feuchtesensoren 6 kann zwischen 10 cm bis 5 m liegen. Bei dem in Fig. 9 dargestellten Ausführungsbeispiel ist vorgesehen, dass der Abstand 29 zumindest im Wesentlichen 40 cm +/- 10 cm beträgt.

Das in Fig. 10 gebildete Sensorfeld des Feuchtesensors 6 kann einen Durchmesser bzw. eine maximale Erstreckung zwischen 3 bis 8 cm aufweisen.

Die Breite 30 der Wasserleitung 31 bzw. der Abstand 30 zwischen zwei unmittelbar benachbarten Fingern 28 kann zwischen 1 mm bis 20 mm betragen.

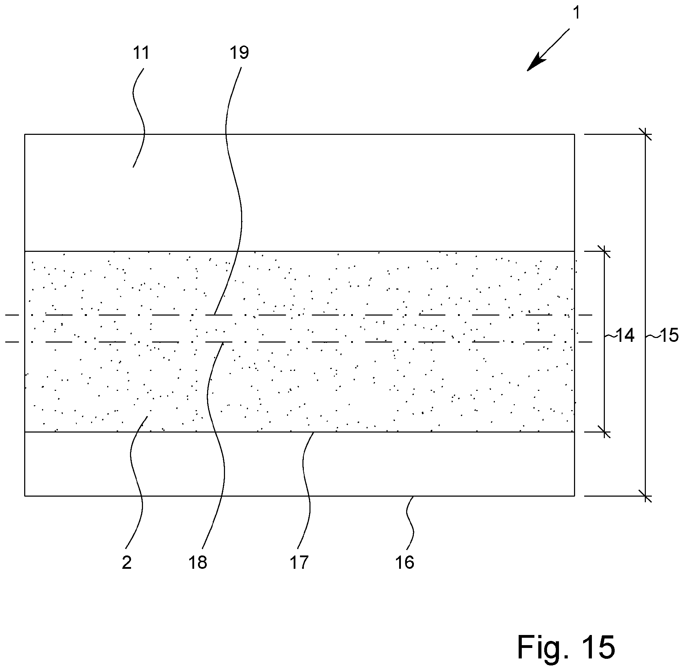

Fig. 15 zeigt, dass die Breite 14 der Trägerschicht 2 sich nicht über die gesamte Breite 15 der Textilschicht 11 erstreckt. In dem in Fig. 15 dargestellten Ausführungsbeispiel ist vorgesehen, dass sich die Breite 14 der Trägerschicht 2 über wenigstens 3 % der Breite 15 der Textilschicht 11 erstreckt, insbesondere kann sich die Breite 14 der Trägerschicht 2 auf zwischen 8 % bis 16 % der Breite 15 der Textilschicht 11 erstrecken. Fig. 15 zeigt weiter, dass die an der Textilschicht 11 angeordnete Trägerschicht 2 zu den Außenrändern 16 der Textilschicht 11 beabstandet ist. Letztlich ist die in Fig. 15 dargestellte Trägerschicht 2 zumindest im Wesentlichen mittig an der Textilschicht 11 angeordnet.

Zudem zeigt Fig. 15, dass die Außenränder 17 der Trägerschicht 2 zumindest im Wesentlichen parallel zu den Außenrändern 16 der Textilschicht 11 verlaufen. Des Weiteren zeigt Fig. 15, dass die Längsachse 18, die in Richtung der größten Erstreckung der Trägerschicht 2 verläuft, parallel zu der Längsachse 19 der Textilschicht 11 verläuft, insbesondere wobei die Achsen 18 und 19 in weitere Ausführungsformen übereinander liegen können.

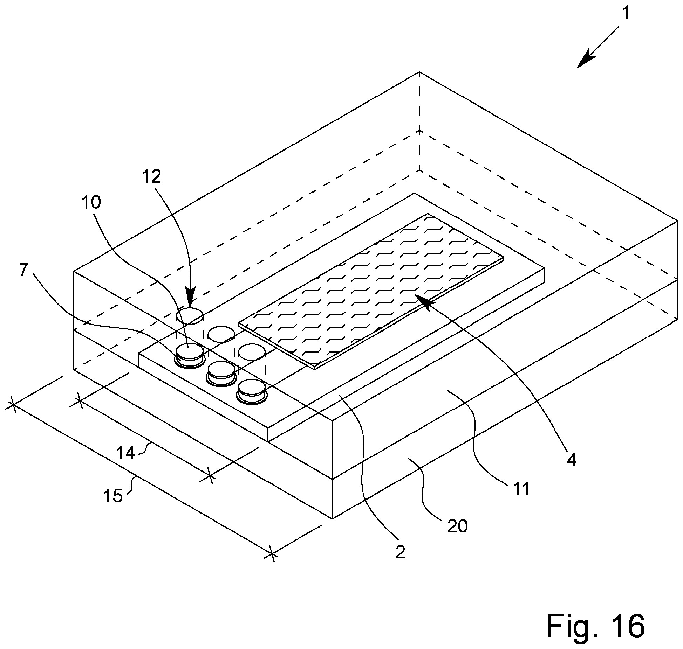

Fig. 16 zeigt, dass der Schichtaufbau 3 eine weitere Schicht 20 zur Ausbildung der Baufolie 1 als Dachbahn aufweist. In weiteren Ausführungsformen kann vorgesehen sein, dass die weitere Schicht 20 den Schichtaufbau 3 als Dachfolie, Fassadendachbahn, Fassadenbahn und/oder Dampfbremse und/oder Unterdachbahn, insbesondere Unterdeck- und/oder Unterspannbahn, ausbildet.

Die weitere Schicht 20 kann als Funktionsschicht ausgebildet sein, die insbesondere dampfsperrend und/oder diffusionsdicht ausgebildet ist. Insbesondere kann die Dachbahn, wie sie in Fig. 16 dargestellt ist, als Flachdachbahn eingesetzt werden.

Fig. 8 zeigt, dass die weitere Schicht 20 an der Außenseite 26 der Trägerschicht 2 angeordnet ist. Die Außenseite 26 kann der Elektronikeinheit 4 abgewandt sein. Nicht dargestellt ist, dass die weitere Schicht 20 diffusionsdicht, diffusionshemmend, wasserdampfundurchlässig und/oder wasserdicht ausgebildet ist.

Die Breite 14 der Trägerschicht 2 kann zwischen 1 bis 100 cm betragen. Außerdem kann die Breite 15 der Textilschicht zwischen 0,5 bis 3 m betragen. Die Breiten 14, 15 können jedoch variieren, insbesondere relativ zueinander.

Fig. 7 zeigt, dass der Schichtaufbau 3 zweischichtig ausgebildet ist und aus der Trägerschicht 2 und der Textilschicht 11 besteht. Die Elektronikeinheit 4 ist auf der Trägerschicht 2 aufgedruckt und wird letztlich als Bestandteil der Trägerschicht 2 angesehen.

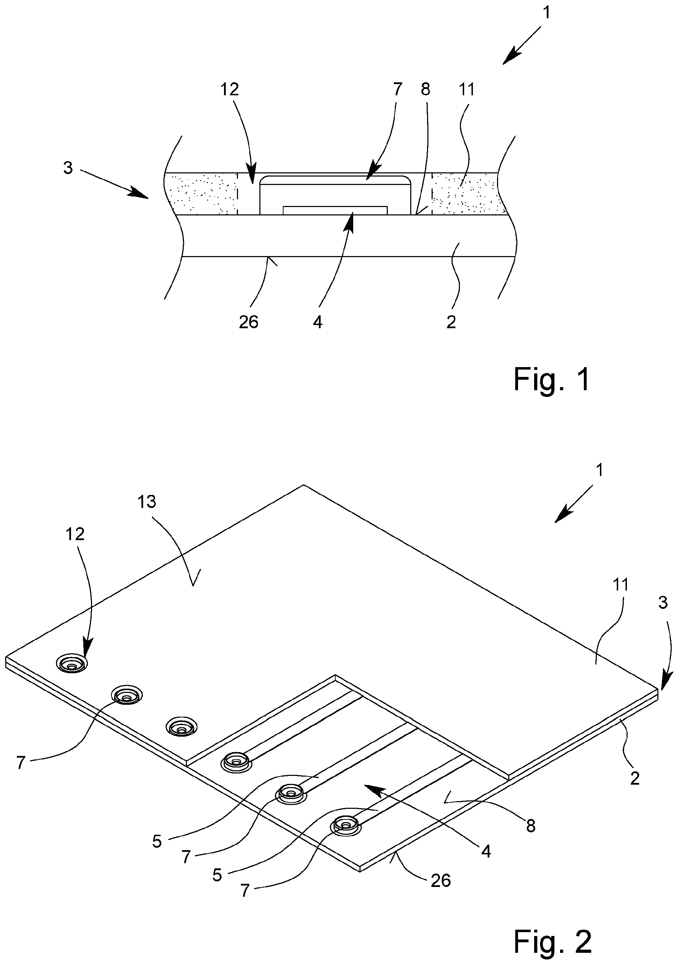

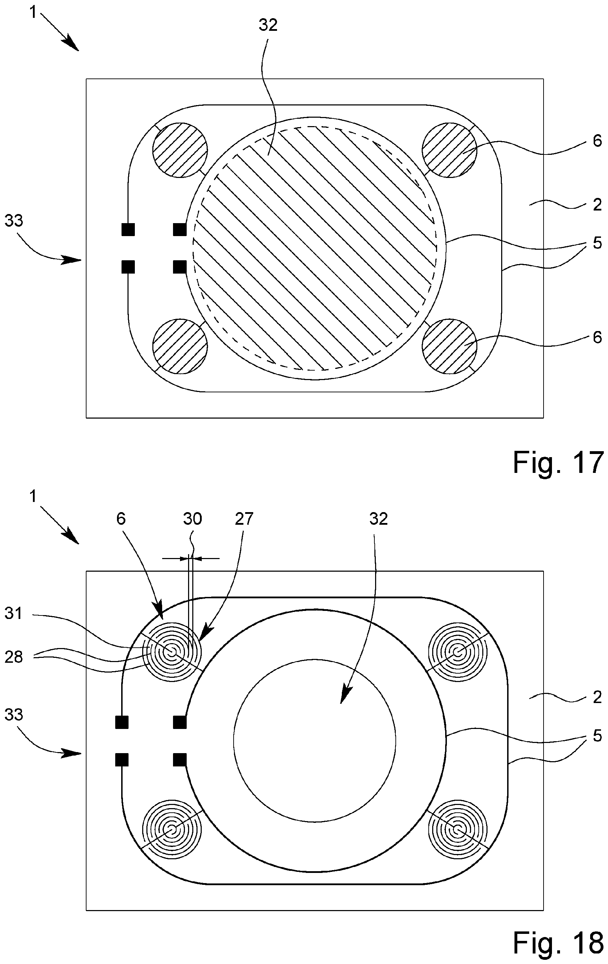

Fig. 17 zeigt die Verwendung einer Baufolie 1 gemäß der zuvor beschriebenen Ausführungsformen nach den Fig. 1 bis 16 als Durchbruchselement 33. Das Durchbruchselement 33 wird insbesondere im Dachaufbau, vorzugsweise im Flachdachaufbau, eingesetzt. Die als Durchbruchselement 33 ausgebildete Baufolie 1 weist wenigstens einen Durchbruch 32 der Baufolie 1 auf. Der Durchbruch 32 dient zur Anordnung und zur Aufnahme eines Durchbruchskörpers 34. Der Durchbruchskörper 34 ist nicht Bestandteil des Durchbruchselements 33. Das Durchbruchselement 33 kann demnach den Durchbruchskörper 34 zumindest bereichsweise umschließen und/oder diesen dahingehend überwachen, dass ein Eindringen von Feuchtigkeit detektiert wird. In weiteren Ausführungsformen kann auch vorgesehen sein, dass eine weitere Baufolie, weitere Baufolienabschnitte und/oder eine Abdichtungsfolie zur Abdichtung des Durchbruchskörpers 34 eingesetzt werden, wobei das Durchbruchselement 33 in einem Bereich eingesetzt wird, der abgedichtet sein soll, wodurch das Durchbruchselement 33 eine Überwachung des Eindringens von Feuchtigkeit gewährleisten kann. Allerdings kann auch in weiteren Ausführungsformen die Abdichtfunktion, insbesondere gegenüber Wasser, durch das Durchbruchselement 33 selbst bereitgestellt werden, insbesondere durch die Trägerschicht 2 und/oder wenigstens eine weitere Schicht 20.

Als Durchbruchskörper 34 kann ein Ablauf, beispielsweise ein Flachdachablauf, und/oder ein Lüfter, insbesondere ein Lüftungsrohr, vorgesehen sein. Insbesondere fungiert das Durchbruchselement 33 als Manschettenelement für den Durchbruchskörper 34, der zumindest bereichsweise, vorzugsweise vollständig, von dem Durchbruchselement 33 umschlossen bzw. umgeben sein kann. Dabei kann vorgesehen sein, dass sich zumindest bereichsweise ein Abstand zwischen der Außenseite des Durchbruchs 32 der Baufolie 1 und dem Durchbruchskörper 34 ergibt oder dass der Durchbruch 32 der Baufolie 1 so an der Außenseite 36 des Durchbruchskörpers 34 angeordnet ist, dass ein Abschluss erfolgt. Beispielsweise kann die Baufolie 1 entlang der Außenseite 36 des Baukörpers 34 hochgeführt sein, so dass sich die Baufolie 1 in diesem Bereich an den Durchbruchskörper 34 anschmiegen kann.

In Fig. 17 ist schematisch dargestellt, dass ein Bereich der Baufolie 1 als Durchbruch 32 ausgebildet werden kann. Dieser Durchbruch 32 kann werkseitig oder anwenderseitig eingebracht werden. Beispielsweise kann dem Anwender angezeigt werden, welcher "mögliche" Bereich als Durchbruch 32 "fungieren" kann. Innerhalb dieses Bereiches kann dann der Anwender vergleichsweise frei einen Einschnitt zur Bildung des Durchbruches 32 vornehmen, so dass der Durchbruch 32 an den individuell vorgesehenen Durchbruchskörper 34 angepasst werden kann. Dies ermöglicht eine Erhöhung der Flexibilität.

In Fig. 17 sind vier Feuchtesensoren 6 dargestellt, die benachbart zu dem Bereich angeordnet sind, der den Durchbruch 32 bilden kann (in Fig. 17 schematisch durch eine Schraffierung angedeutet). Die Feuchtesensoren 6 können über Leiterbahnen 5 miteinander verbunden sein. Bei dem in Fig. 17 dargestellten Ausführungsbeispiel ist vorgesehen, dass weder die Feuchtesensoren 6 noch die Leiterbahnen 5 von dem Durchbruch 32 unterbrochen bzw. durchbrochen werden. Bei der in Fig. 17 dargestellten Ausführungsform ist eine einteilige Ausführung des Durchbruchselementes 33 vorgesehen. In weiteren, nicht dargestellten Ausführungsformen kann das Durchbruchselement 33 durchaus auch mehrteilig ausgebildet sein, insbesondere in Abhängigkeit der Außenabmessungen des Durchbruchskörpers 34.

Die Leiterbahnen 5 können die Feuchtesensoren 6 elektrisch miteinander verbinden.

In weiteren Ausführungsformen können zwischen 3 bis 20 Feuchtesensoren 6 am Durchbruchselement 33 eingesetzt werden. Insbesondere hängt die Anzahl der eingesetzten Feuchtesensoren 6 auch von den Außenabmessungen des Durchbruches 32 ab.

In Fig. 18 ist dargestellt, dass die Leiterbahnen 5 um den Durchbruch 32 herum angeordnet sind.

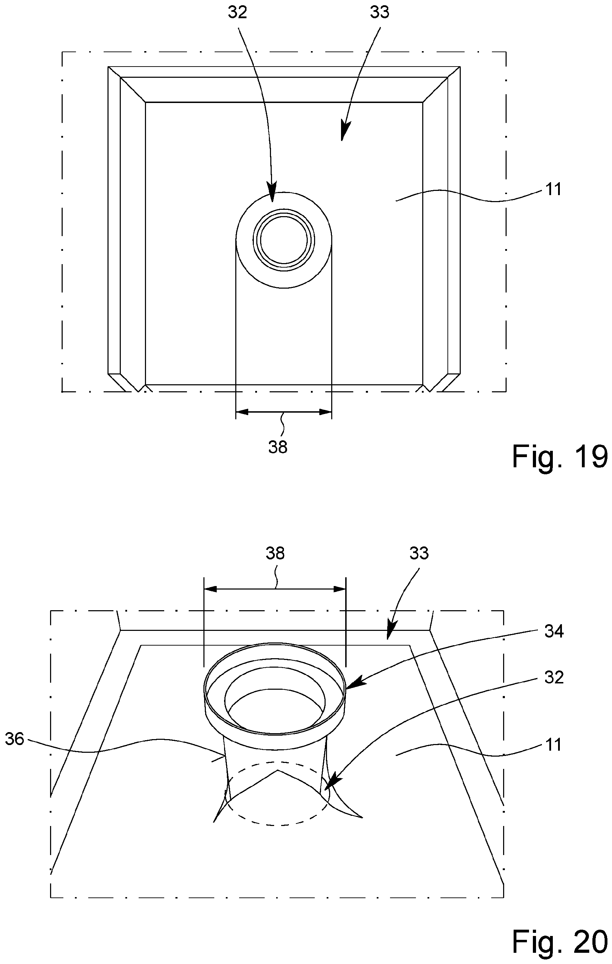

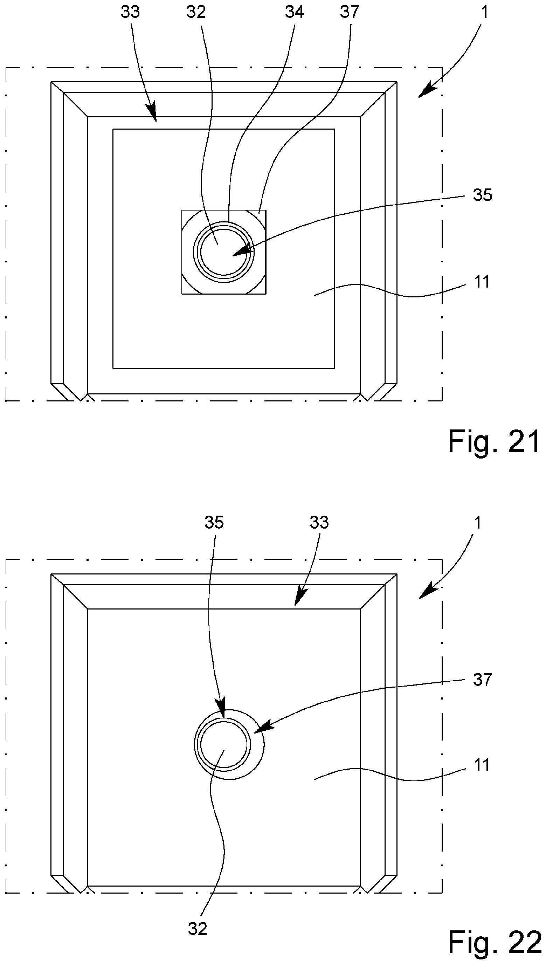

Bei dem in den Fig. 19 bis 23 dargestellten Ausführungsformen sind unterschiedliche Durchbrüche 32 und Durchbruchskörper 34 dargestellt. In Fig. 21 ist dargestellt, dass die Trägerschicht 2 einen ersten Durchbruch 35 aufweist. In Fig. 21 ist allerdings auch der Durchbruchskörper 34 ersichtlich, so dass der Durchbruch 35 der Trägerschicht 2 nur "verdeckt" erkenntlich wird. Der erste Durchbruch 35 schließt in dem in Fig. 21 dargestellten Ausführungsbeispiel mit dem Durchbruchskörper 34 ab.

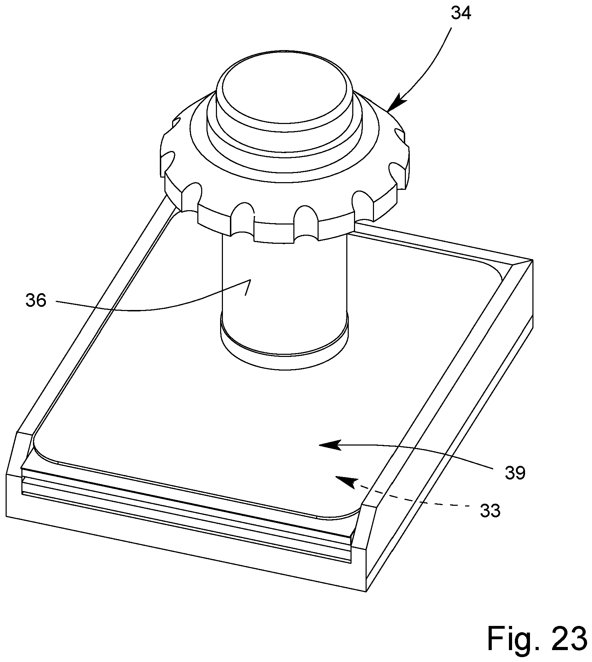

In Fig. 23 ist dargestellt, dass das Durchbruchselement 33 unterhalb einer Abdichtungsebene 39, insbesondere eine wasserdichte Unterdachbahn, angeordnet ist und das Eindringen von Feuchtigkeit unterhalb der Abdichtungsbahn 39 überwacht.

Alternativ oder zusätzlich kann vorgesehen sein, dass das Durchbruchselement 33 auf einer Dampfsperre und/oder unterhalb einer Abdichtungsebene, insbesondere unterhalb einer Abdichtungsbahn 39, angeordnet ist.

Die Trägerschicht 2 der Baufolie 1 kann zumindest bereichsweise entlang der Außenseite 36 des Durchbruchskörpers 34 hochgeführt ist, insbesondere schmiegt sich die Trägerschicht 2 in diesem Bereich an die Außenseite 36 des Durchbruchskörpers 34 an. Darüber hinaus kann der Durchbruchskörper 34 mit der Trägerschicht 2 in diesem Bereich verklebt und/oder verbunden sein, insbesondere abdichtend.

Fig. 21 zeigt, dass die Textilschicht 11 einen gegenüber dem ersten Durchbruch 35 die Trägerschicht 2 vergrößerten weiteren Durchbruch 37 aufweist. Der weitere Durchbruch 37 kann zu der Außenseite 36 des Durchbruchskörpers 34 zumindest bereichsweise beabstandet sein und ferner alternativ oder zusätzlich auch zumindest bereichsweise an der Außenseite 36 des Durchbruchskörpers 34 angeordnet sein.

In Fig. 22 ist dargestellt, dass sowohl der erste Durchbruch 35 als auch der zweite Durchbruch 37 zumindest im Wesentlichen bündig miteinander abschließen. In Fig. 22 ist allerdings der Durchbruchskörper 34 nicht näher dargestellt.

In Fig. 20 ist dargestellt, dass die Trägerschicht 2 einen Durchbruch 32 aufweist. Die Textilschicht 11 weist Einschnitte, insbesondere einen Kreuzeinschnitt, auf. Durch diese Einschnitte kann der Durchbruchskörper 34 geführt werden. Die Abschnitte der Textilschicht, die im Durchbruch 32 angeordnet sind, können entlang der Außenseite 36 des Durchbruchskörpers 34 hochgeführt werden, wie dies Fig. 20 schematisch zeigt.

Der in Fig. 23 gezeigte Durchbruchskörper 34 kann einen Außendurchmesser von wenigstens 20 mm, bevorzugt zwischen 100 mm bis 300 mm, aufweisen. Somit kann der wenigstens eine Durchbruch 32 der Baufolie 1 auch einen Außendurchmesser 38 zwischen 100 bis 300 mm aufweisen. Bevorzugt ist der Außendurchmesser des Durchbruches 32 entsprechend dem Außendurchmesser 38 des Durchbruchskörpers 34 ausgebildet, insbesondere da der Durchbruch 32 der Au-ßenform des Durchbruchskörpers 34 zumindest im Wesentlichen entspricht, so dass sich ein zumindest im Wesentlichen bündiger Abschluss zwischen dem Durchbruch 32 und dem Durchbruchskörper 34.

Nicht näher dargestellt ist, dass der Durchbruchskörper 34 auch eine maximale Länge von wenigstens 1 m und/oder eine maximale Breite von wenigstens 1 m aufweisen kann. Insbesondere kann der Durchbruchskörper 34 auch eine zumindest im Wesentlichen rechteckförmige Außenform aufweisen, insbesondere wobei die Länge zwischen 1 bis 2 m und die Breite zwischen 1 bis 2 m betragen kann. Solche Außenformen ergeben sich beispielsweise bei Lichtkuppeln, die im Flachdachbereich eingesetzt werden.

Gerade für größere Durchbruchskörper 34 ist es dabei vorteilhaft, wenn das Durchbruchselement 33 wenigstens zweiteilig ausgebildet ist. Insbesondere können wenigstens zwei voneinander getrennte Abschnitte der Baufolie 1 das Durchbruchselement 38 bilden. Diese Elemente können über das noch nachfolgend beschriebene Verbindungssystem miteinander elektrisch verbunden werden. Letztlich können unterschiedliche Abschnitte der Baufolie 1 das Durchbruchselement 33 bilden. Das Durchbruchselement 33 kann zumindest bereichsweise um den Durchbruchskörper 34 herum angeordnet sein, vorzugsweise den Durchbruchskörper 34 vollständig umgeben. Letztlich stellt das Durchbruchselement 33 eine Feuchtigkeitsüberwachung im Dachaufbau im Bereich des Durchbruchskörpers 34 sicher.

In weiteren Ausführungsformen kann der Durchbruchskörper 34 im Bereich der Baufolie 1 einen zumindest im Wesentlichen kreisförmigen Außenquerschnitts aufweisen. Grundsätzlich sind aber unterschiedliche Außenformen für das Durchbruchelement 33 möglich.

Nicht dargestellt ist ein Dachaufbau, der insbesondere für ein Flachdach vorgesehen ist. Der Dachaufbau kann eine Baufolie 1 nach einer der zuvor beschriebenen Ausführungsformen aufweisen. Zumindest im Einbauzustand der Baufolie 1 kann der Feuchtesensor 6 oberseitig, der Witterungsseite zugewandt, oder unterseitig, der Witterungsseite abgewandt, an der Baufolie 1 angeordnet sein.

Ebenfalls nicht dargestellt ist, dass der Schichtaufbau 3 eine weitere Textilschicht, insbesondere eine weitere Vliesschicht, aufweist. Die weitere Vliesschicht kann an der der Textilschicht 11 gegenüberliegenden Seite der Baufolie 1 angeordnet sein. Alternativ oder zusätzlich kann vorgesehen sein, dass die weitere Textilschicht an der der Elektronikeinheit 4 abgewandten Seite der Trägerschicht 11 - nämlich die Außenseite 26 - angeordnet ist.

Fig. 1 zeigt eine Baufolie 1. Die Baufolie 1 kann insbesondere im Flachdachbereich und/oder innerhalb einer Unterbedachung verwendet werden. Ferner zeigt Fig. 1, dass die Baufolie 1 eine Trägerschicht 2 aufweist, die in einem Schichtaufbau 3 integriert ist. Der Schichtaufbau 3 kann einschichtig oder mehrschichtig ausgebildet sein. Bei dem in Fig. 1 dargestellten Ausführungsbeispiel ist ein wenigstens zweischichtiger Schichtaufbau 3 vorgesehen.

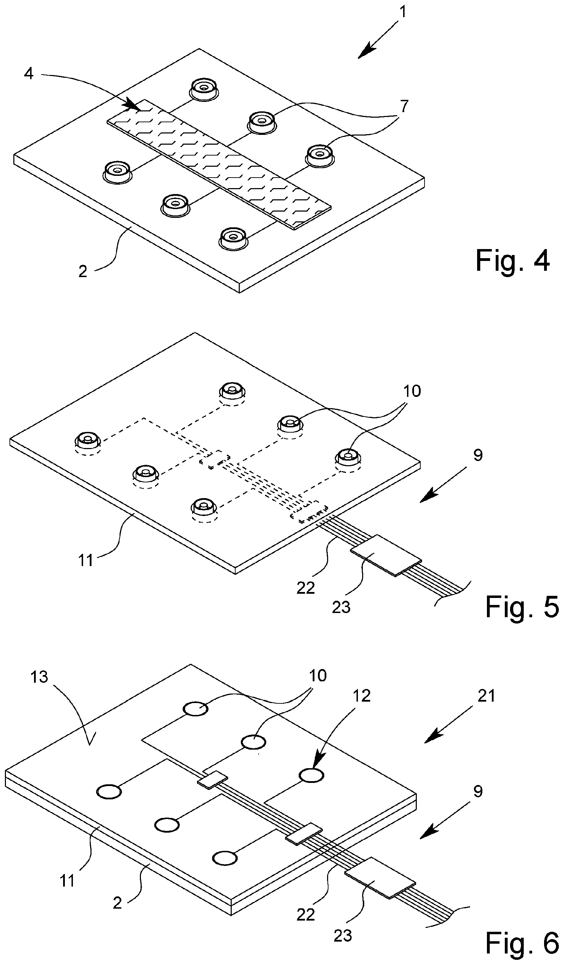

Fig. 4 zeigt eine einschichtige Baufolie 1. Die Trägerschicht 2 weist eine Elektronikeinheit 4 auf.

In Fig. 9 ist dargestellt, dass die Elektronikeinheit 4 eine Mehrzahl an Leiterbahnen 5 und/oder einen Sensor 6, insbesondere einen Feuchtesensor, aufweisen kann. Der Sensor 6 kann mit den Leiterbahnen 5 verbunden sein. Insbesondere kann der Sensor 6 auch mit einer Mehrzahl der Leiterbahnen 5 verbunden sein.

Zudem zeigt Fig. 1, dass die Trägerschicht 2 ein erstes Verbindungsmittel 7 aufweist, das über die Trägerschicht 2 - nämlich über die Außenseite 8 der Trägerschicht 2 - übersteht. Das erste Verbindungsmittel 7 ist mit der Elektronikeinheit 4, insbesondere mit den Leiterbahnen 5 und/oder dem Sensor 6 der Elektronikeinheit 4, verbunden.

In Fig. 1 ist dargestellt, dass das erste Verbindungsmittel 7 derart ausgebildet ist, dass die Elektronikeinheit 4 über das erste Verbindungsmittel 7 elektrisch mit einer externen Anschlusseinrichtung 9 verbunden werden kann. Die Verbindung des ersten Verbindungsmittels 7 mit der externen Anschlusseinrichtung 9 kann lösbar, insbesondere werkzeuglos lösbar, erfolgen. Über die elektrische Verbindung zwischen dem ersten Verbindungsmittel 7 und der externen Anschlusseinrichtung 9 kann eine elektrische Kontaktierung der externen Anschlusseinrichtung 9 an die Elektronikeinheit 4 der Baufolie 1 erfolgen.

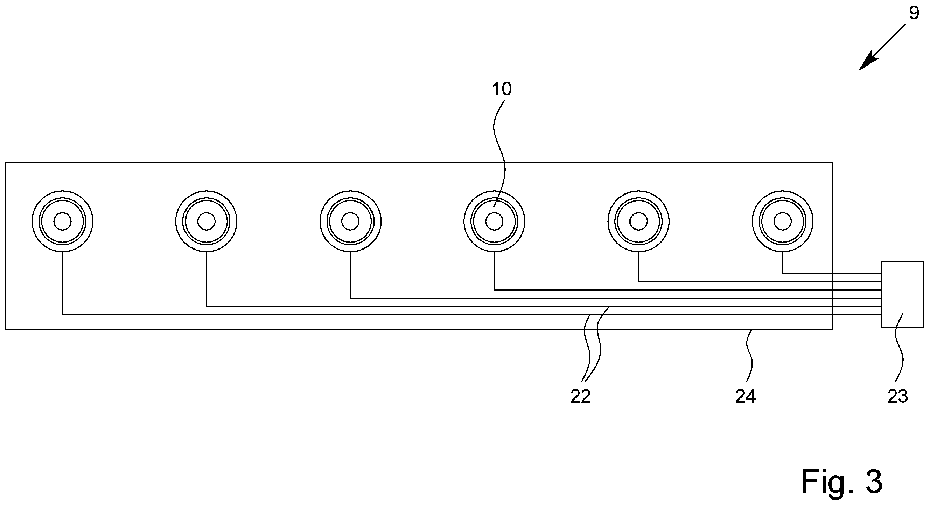

In Fig. 3 ist schematisch eine externe Anschlusseinrichtung 9 dargestellt, die mit den ersten Verbindungsmitteln 7 der in Fig. 1 dargestellten Baufolie 1 verbunden werden kann.

Ferner zeigen die Fig. 4 bis 6 ebenfalls eine komplementäre Ausbildung des ersten Verbindungsmittels 7 zu den zweiten Verbindungsmittel 10 der externen Anschlusseinrichtung 9. So kann das erste Verbindungsmittel 7 komplementär zu einem zweiten Verbindungsmittel 10 der externen Anschlusseinrichtung 9 ausgebildet sein, wobei das erste Verbindungsmittel 7 den elektrischen Kontakt zwischen dem zweiten Verbindungsmittel 10 der externen Anschlusseinrichtung 9 und der Elektronikeinheit 4 der Baufolie 1 bereitstellen kann.

Bei dem in den Fig. 4 bis 6 dargestellten Ausführungsbeispiel ist vorgesehen, dass das erste Verbindungsmittel 7 als Verbindungsmittel eines komplementären, vorzugsweise zerstörungsfrei und/oder werkzeuglos lösbaren, Verbindungssystems ausgebildet ist. In dem dargestellten Ausführungsbeispiel ist als Verbindungssystem eine Druckknopfverbindung vorgesehen. Die Druckknopfverbindung weist insbesondere eine geringe Aufbauhöhe auf. So kann die Aufbauhöhe des ersten Verbindungsmittels 7, das mit dem zweiten Verbindungsmittel 10 verbunden ist, insbesondere eine Höhe von 1 cm nicht überschreiten.

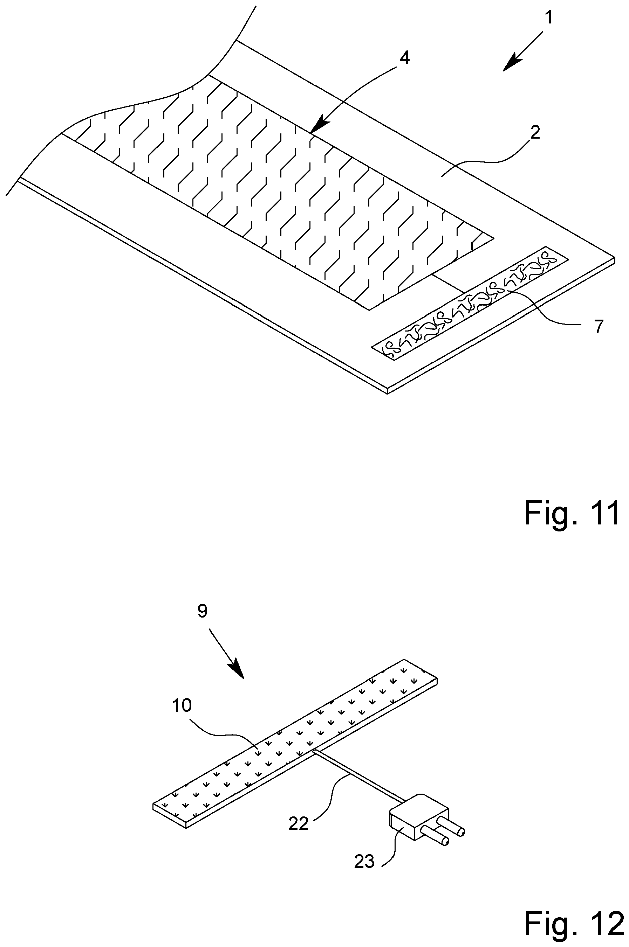

In den Fig. 11 und 12 ist eine weitere schematische Darstellung eines komplementären Verbindungssystems gezeigt. In Fig. 11 ist dargestellt, dass die Baufolie 1 ein erstes Verbindungsmittel 7 aufweist, das als männliches oder weibliches Teil einer Klettverschlussverbindung ausgebildet sein kann. Die Anschlusseinrichtung 9 kann ein dazu komplementär ausgebildetes zweites Verbindungsmittel 10 aufweisen, wie dies in Fig. 12 schematisch dargestellt ist. Das in Fig. 12 dargestellte zweite Verbindungsmittel 10 kann lösbar mit dem ersten Verbindungsmittel 7 der in Fig. 11 dargestellten Baufolie 1 verbunden werden. Über die Anschlusseinrichtung 9 kann demzufolge ein elektrischer Kontakt zu der Elektronikeinheit 4 der Baufolie 1 gewährleistet werden.

Nicht dargestellt ist, dass als Verbindungssystem auch eine Klebeverbindung vorgesehen sein kann.

Das erste Verbindungsmittel 7 kann zwischen 0,5 bis 15 mm über die Außenseite 8 der Trägerschicht 2 überstehen.

In Fig. 9 ist dargestellt, dass die Trägerschicht 2 eine Elektronikeinheit 4 mit wenigstens einem Sensor 6 aufweist. Im dargestellten Ausführungsbeispiel ist der Sensor 6 als Feuchtesensor ausgebildet.

Fig. 1 zeigt, dass die Elektronikeinheit 4 wenigstens eine Leiterbahn 5 aufweist, wobei das erste Verbindungsmittel 7 mit wenigstens einer Leiterbahn 5 elektrisch leitend verbunden ist. Fig. 1 zeigt nicht, dass alternativ oder zusätzlich das erste Verbindungsmittel 7 auch elektrisch mit dem Sensor 6 verbunden werden kann.

In Fig. 1 ist weiter dargestellt, dass die Baufolie 1 zwischen 1 bis 20 - nämlich insbesondere in dem dargestellten Ausführungsbeispiel sechs - erste Verbindungsmittel 7 aufweisen kann. In Fig. 11 ist dargestellt, dass ein erstes Verbindungsmittel 7 an der Baufolie 1 vorgesehen ist.

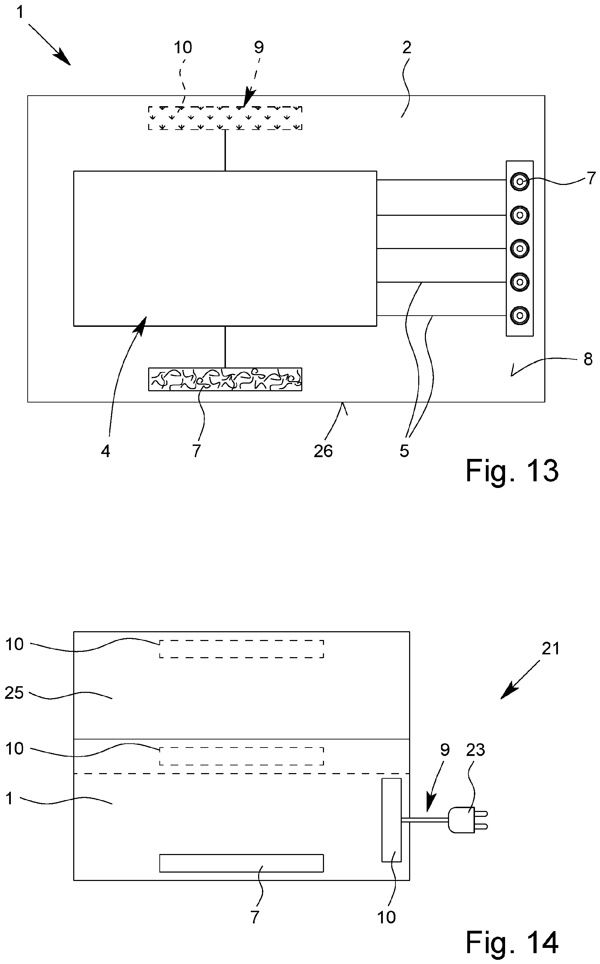

In Fig. 13 ist dargestellt, dass die Baufolie 1 sowohl das erste Verbindungsmittel 7 als auch das zweite Verbindungsmittel 10 umfassen kann. So kann die Baufolie 1 die externe Anschlusseinrichtung 9 für eine weitere Baufolie 25 aufweisen. Die das zweite Verbindungsmittel 10 aufweisende Anschlusseinrichtung 9 kann auf der das erste Verbindungsmittel 7 aufweisenden gegenüberliegenden Außenseite 26 angeordnet sein, insbesondere wobei das zweite Verbindungsmittel 10 elektrisch mit dem ersten Verbindungsmittel 7 und/oder der Elektronikeinheit 4 verbunden sein kann. So können die Baufolien 1, 25 miteinander elektrisch über das erste und das zweite Verbindungsmittel 7, 10, verbunden werden, wie dies schematisch in Fig. 14 dargestellt ist.

In der Fig. 1 und 2 ist dargestellt, dass die Textilschicht 11 im Bereich des ersten Verbindungsmittels 7 eine Ausnehmung 12 aufweist, um letztlich den Zugang zu dem ersten Verbindungsmittel 7 zu gewährleisten.

Alternativ oder zusätzlich kann vorgesehen sein, dass das erste Verbindungsmittel 7 über die Textilschicht 11 übersteht. Bei dem in Fig. 2 dargestellten Ausführungsbeispiel ist kein Überstand des ersten Verbindungsmittels 7 über die Textilschicht 11 vorgesehen.

Insbesondere kann in weiteren Ausführungsformen das erste Verbindungsmittel 7 über die der Trägerschicht 2 abgewandte Außenseite 13 der Textilschicht 11 überstehen.

Fig. 14 zeigt ein System 21 mit wenigstens einer Baufolie 1 nach einer der zuvor beschriebenen Ausführungsformen und einer externen Anschlusseinrichtung 9 zur elektrischen Kontaktierung des wenigstens einen ersten Verbindungsmittels 7 der Baufolie 1. Die Anschlusseinrichtung 9 weist wenigstens ein komplementär zu dem ersten Verbindungsmittel ausgebildetes zweites Verbindungsmittel 10 auf, wobei das erste und zweite Verbindungsmittel 7, 10 werkzeuglos lösbar miteinander verbunden sind.

Nicht dargestellt ist, dass die Anschlusseinrichtung 9 mit einer Auswerteeinrichtung verbindbar ist, vorzugsweise zur Auswertung der von dem Sensor 6 der Elektronikeinheit 4 erfassten Messergebnisse. Alternativ oder zusätzlich kann vorgesehen sein, dass die Anschlusseinrichtung 9 mit einer Energieversorgungseinrichtung verbunden ist.

In Fig. 6 ist dargestellt, dass die Anschlusseinrichtung 9 wenigstens ein Leitungskabel 22 aufweist. Nicht dargestellt ist, dass die Anschlusseinrichtung 9 wenigstens eine Anschlussleiterbahn zur elektrischen Verbindung aufweist. Das Leitungskabei 22 kann mit dem zweiten Verbindungsmittel 10 verbunden sein, wie schematisch in Fig. 3 dargestellt ist.

In Fig. 3 ist auch dargestellt, dass die Anschlusseinrichtung 9 wenigstens ein Kontaktierungsmittel 23 aufweist. In dem in Fig. 14 dargestellten Ausführungsbeispiel ist vorgesehen, dass das Kontaktierungsmittel 23 als männliches oder weibliches Kontaktierungsmittel 23 einer auszubildenden Steckverbindung ausgebildet ist. Das Kontaktierungsmittel 23 ist zum Anschluss weiterer elektronischer Komponenten, wie beispielsweise eine Energieversorgungseinrichtung, vorgesehen. In Fig. 3 ist dargestellt, dass das Kontaktierungsmittel 23 mit dem zweiten Verbindungsmittel 10 über wenigstens ein Leitungskabel 22 verbunden ist.

In Fig. 13 ist schematisch dargestellt, dass die Anschlusseinrichtung 9 an einer weiteren Baufolie 25 vorgesehen sein kann, so dass sich über die Verbindung zwischen dem ersten Verbindungsmittel 7 der Baufolie 1 und dem zweiten Verbindungsmittel 10 der Anschlusseinrichtung 9 einer weiteren Baufolie 25 eine elektrische Kontaktierung der Baufolien 1, 25 zueinander ergibt.

In Fig. 13 ist letztlich eine Baufolie 1 dargestellt, die sowohl ein erstes Verbindungsmittel 7 als auch ein zweites Verbindungsmittel 10 aufweist, so dass die in Fig. 13 dargestellte Baufolie 1 mit weiteren Baufolien 25 verbunden ist. Weiter zeigt Fig. 13, dass die Baufolie 1 auch ein weiteres erstes Verbindungsmittel 7 aufweist, das sich von dem Verbindungsmittel 7 zur Anbindung der weiteren Baufolie 25 unterscheiden kann. Dieses weitere Verbindungsmittel 7 kann insbesondere zur Anbindung einer Anschlusseinrichtung 9 vorgesehen sein, die nicht an einer weiteren Baufolie 25 angeordnet ist, wie dies schematisch in Fig. 14 dargestellt ist.

Fig. 14 zeigt miteinander verbundene Baufolien 1, 25, die insbesondere über die ersten und zweiten Verbindungsmittel 7, 10 miteinander verbunden sind. Wenigstens eine Baufolie 1 ist dabei mit einer externen Anschlusseinrichtung 9 verbunden, die ein Kontaktierungsmittel 23 - nämlich einen Teil einer Steckverbindung - aufweist. Über die externe Anschlusseinrichtung 9, die nicht an einer Baufolie 1 vorgesehen ist, kann die elektrische Versorgung aller Baufolien 1, 25 und/oder die Datenübertragung zwischen allen Baufolien 1, 25 gewährleistet werden.

In weiteren Ausführungsformen kann vorgesehen sein, dass das erste und zweite Verbindungsmittel 7, 10 formschlüssig, reibschlüssig, stoffschlüssig und/oder verrastbar lösbar miteinander verbindbar sind. Bei den in den Fig. 4 bis 6 dargestellten Ausführungsbeispielen ist vorgesehen, dass die Verbindungsmittel 7, 10 miteinander formschlüssig verbindbar sind.

Die ersten und zweiten Verbindungsmittel 7, 10 können ein komplementäres Verbindungssystem ausbilden, das insbesondere zerstörungsfrei und/oder werkzeuglos lösbar ist. Bei dem in Fig. 11 und 12 dargestellten Ausführungsbeispiel ist vorgesehen, dass das erste Verbindungsmittel 7, wie es in Fig. 11 dargestellt ist, mit dem in Fig. 12 dargestellten zweiten Verbindungsmittel 10 zusammenwirken kann, wobei die Verbindungsmittel 7, 10 eine Klettverschlussverbindung ausbilden können.

In den Fig. 4 bis 6 ist dargestellt, dass das erste und zweite Verbindungsmittel 7, 10 ein komplementäres Verbindungssystem in Form einer Druckknopfverbindung ausbilden können.

In Fig. 3 ist dargestellt, dass das zweite Verbindungsmittel 7 der Anschlusseinrichtung 9 in einem Gehäuse 24 angeordnet ist. Das Gehäuse 24 kann als Widerlager dienen, das bei der Herstellung der Verbindung zwischen dem ersten und dem zweiten Verbindungsmittel 7, 10 benötigt wird. Über das Gehäuse 24 kann der zum Zusammenbringen bzw. Verrasten der Verbindungsmittel 7, 10 benötigte Gegendruck bereitgestellt werden.

Die Anschlusseinrichtung 9 kann insbesondere eine Vliesschicht und/oder Gewebeschicht und/oder Folienschicht aufweisen, an der das zweite Verbindungsmittel 10 angeordnet werden kann. Alternativ oder zusätzlich kann vorgesehen sein, dass die Vliesschicht der Anschlusseinrichtung 9 zur elektrischen Kontaktierung des zweiten Verbindungsmittels 10, bevorzugt aufgedruckte, Anschlussleitbahnen aufweist.

### Bezugszeichenliste:

- 1: Baufolie
- 2: Trägerschicht
- 3: Schichtaufbau
- 4: Elektronikeinheit
- 5: Leiterbahn
- 6: Sensor
- 7: erstes Verbindungsmittel
- 8: Außenseite von 2
- 9: externe Anschlusseinrichtung
- 10: zweites Verbindungsmittel
- 11: Textilschicht
- 12: Ausnehmung
- 13: Außenseite von 11
- 14: Breite von 2
- 15: Breite von 11
- 16: Außenrand von 11
- 17: Außenrand von 2
- 18: Längsachse von 2
- 19: Längsachse von 11
- 20: weitere Schicht
- 21: System
- 22: Leitungskabel
- 23: Kontaktierungsmittel
- 24: Gehäuse
- 25: weitere Baufolie
- 26: Außenseite von 2
- 27: Messleiterbahn
- 28: Finger
- 29: Abstand
- 30: Abstand
- 31: Wasserleitung
- 32: Durchbruch
- 33: Durchbruchselement
- 34: Durchbruchskörper
- 35: erster Durchbruch
- 36: Außenseite
- 37: weiterer Durchbruch
- 38: (Außen-)Durchmesser
- 39: Abdichtungsebene

## Patentansprüche

1. Baufolie (1), mit einem eine Trägerschicht (2) und eine Textilschicht (11) aufweisenden mehrlagigen Schichtaufbau (3), wobei auf die Außenseite (13) der Trägerschicht (2) eine wenigstens einen Feuchtesensor (6) aufweisende Elektronikeinheit (4) aufgedruckt ist, wobei Textilschicht (11) wasserdurchlässig, vorzugsweise wasseraufnehmend, ist, wobei die Elektronikeinheit (4) zwischen der Trägerschicht (2) und der Textilschicht (11) vorgesehen ist, wobei der Feuchtesensor (6) im unmittelbaren Kontakt mit der Textilschicht (11) ist, insbesondere an der Textilschicht (11) angeordnet ist, und wobei der Feuchtesensor (6) als resistiver Feuchtesensor (6) ausgebildet ist.

2. Baufolie nach Anspruch 1, **dadurch gekennzeichnet, dass** der Feuchtesensor (6) durch wenigstens zwei benachbarte elektrisch leitfähige Messleiterbahnen (27) zur resistiven Feuchtemessung gebildet ist.

3. Baufolie nach Anspruch 1 oder 2, **dadurch gekennzeichnet, dass** die wenigstens zwei Messleiterbahnen (27) des Feuchtesensors (6) miteinander kämmen und/oder dass die wenigstens zwei Messleiterbahnen (27) des Feuchtesensor (6) jeweils eine Mehrzahl von abstehenden Fingern (28) aufweisen, wobei, vorzugsweise, die Finger (28) der Messleiterbahnen (27) einander greifen und/oder miteinander kämmen.

4. Baufolie nach einem der vorhergehenden Ansprüche, **dadurch gekennzeichnet, dass** der Feuchtesensor (6) mit wenigstens einer Leiterbahn (5) der Elektronikeinheit (4), vorzugweise mit wenigstens zwei Leiterbahnen (5), insbesondere zwischen drei bis acht Leiterbahnen (5), verbunden ist, insbesondere wobei die eine Messleiterbahn (27) mit wenigstens einer Leiterbahn (5) der Elektronikeinheit (4) elektrisch verbunden ist und/oder insbesondere wobei die weitere Messleiterbahn (27) mit wenigstens einer, bevorzugt mit wenigstens zwei, weiter bevorzugt zwischen drei bis acht, Leiterbahnen (5) elektrisch verbunden ist.

5. Baufolie nach einem der vorhergehenden Ansprüche, **dadurch gekennzeichnet, dass** die Trägerschicht (2) wasserdicht ausgebildet ist und/oder dass die Trägerschicht (2) als, vorzugsweise wasserdichte, Folienschicht ausgebildet ist, insbesondere wobei die Trägerschicht (2) als Material einen Kunststoff, vorzugsweise einen thermoplastischen Kunststoff, weiter bevorzugt Polypropylen, Polyethylen und/oder Polyethylenterephthalat, aufweist und/oder daraus besteht, und/oder dass die Trägerschicht (2) diffusionsoffen, insbesondere wasserdampfdurchlässig, und/oder wasserdicht und/oder atmungsaktiv ausgebildet ist und/oder dass die Trägerschicht (2) diffusionsdicht, diffusionshemmend, wasserdampfundurchlässig und/oder wasserdicht ausgebildet ist.

6. Baufolie nach einem der vorhergehenden Ansprüche, **dadurch gekennzeichnet, dass** die, bevorzugt als Vliesschicht ausgebildete, Textilschicht (11) hydrophile Fasern aufweist, insbesondere aus hydrophilen Fasern, bevorzugt Polyethylenterephthalat aufweisende Fasern, aufgebaut ist, und/oder dass die Fasern der Textilschicht (11) eine hydrophile Beschichtung aufweisen.

7. Baufolie nach einem der vorhergehenden Ansprüche, **dadurch gekennzeichnet, dass** die über die Länge der Baufolie (1) eine Mehrzahl von insbesondere gleich beabstandeten Feuchtesensoren (6) vorgesehen ist, insbesondere wobei unmittelbar benachbarte Feuchtesensoren (6) einen Abstand (29) zueinander zwischen 10 cm bis 5 m, bevorzugt zwischen 20 cm bis 3 m, weiter bevorzugt zwischen 40 cm bis 1,5 m, aufweisen.

8. Baufolie nach einem der vorhergehenden Ansprüche, **dadurch gekennzeichnet, dass** das durch den Feuchtesensor (6) gebildete Sensorfeld einen Durchmesser und/oder eine maximale Erstreckung zwischen 0,5 cm bis 20 cm, bevorzugt zwischen 1 bis 10 cm, weiter bevorzugt zwischen 3 bis 8 cm, aufweist.

9. Baufolie nach einem der vorhergehenden Ansprüche, **dadurch gekennzeichnet, dass** der, insbesondere minimale, Abstand (30) unmittelbar benachbarter Finger (28) der Messleiterbahnen (27) und/oder die, insbesondere maximale, Breite (30) wenigstens einer zwischen den wenigstens zwei Messleiterbahnen (27) gebildete Wasserleitung (31) weniger als 1 cm, bevorzugt weniger als 0,5 cm, weiter bevorzugt weniger als 0,3 cm, vorzugsweise zwischen 1 mm bis 10 mm, beträgt.

10. Baufolie nach einem der vorhergehenden Ansprüche, **dadurch gekennzeichnet, dass** die Breite (14) der Trägerschicht (2) sich über wenigstens 3 %, bevorzugt zwischen 3% bis 50 %, weiter bevorzugt zwischen 5 % bis 25%, vorzugsweise zwischen 8 % bis 16%, der Breite (15) der Textilschicht (11) erstreckt, insbesondere wobei die an der Textilschicht (11) angeordnete Trägerschicht (2) zu den Außenrändern (16) der Textilschicht (11) beabstandet ist und/oder mittig an der Textilschicht (11) angeordnet ist und/oder insbesondere wobei die Außenränder (16, 17) der Trägerschicht (2) und der Textilschicht (11) zumindest im Wesentlichen parallel zueinander verlaufen und/oder insbesondere wobei die Längsachse (18) der Trägerschicht (2) zumindest im Wesentlichen parallel zur Längsachse (19) der Textilschicht (11) verläuft.

11. Baufolie nach einem der vorhergehenden Ansprüche, **dadurch gekennzeichnet, dass** die Trägerschicht (2) eine Breite (14) zwischen 1 bis 100 cm, bevorzugt zwischen 10 bis 50 cm, weiter bevorzugt zwischen 13 bis 20 cm, aufweist und/oder dass die Textilschicht (11) eine Breite (15) zwischen 0,5 m bis 3 m, bevorzugt zwischen 1 bis 2 m, aufweist.

12. Baufolie nach einem der vorhergehenden Ansprüche, **dadurch gekennzeichnet, dass** der Schichtaufbau (3) wenigstens eine weitere Schicht (20) zur Ausbildung der Baufolie (1) als Dachbahn, Dachfolie, Flachdachbahn, Fassadenbahn und/oder Dampfbremse und/oder Unterdachbahn, insbesondere Unterdeck- und/oder Unterspannbahn aufweist.

13. Baufolie nach einem der vorhergehenden Ansprüche, **dadurch gekennzeichnet, dass** der Schichtaufbau (3) zweischichtig ausgebildet ist und aus der Trägerschicht (2) und der Textilschicht (11) besteht.

14. Dachaufbau, insbesondere vorgesehen für ein Flachdach, mit einer Baufolie (1) nach einem der vorhergehenden Ansprüche, wobei - zumindest im Einbauzustand der Baufolie (1) - der Feuchtesensor (6) oberseitig, der Witterungsseite zugewandt, oder unterseitig, der Witterungsseite abgewandt, an der Baufolie (1) angeordnet ist.

15. Verwendung wenigstens einer Baufolie (1) nach einem der vorhergehenden Ansprüche 1 bis 13, vorzugsweise im Dachaufbau, als wenigstens einen Durchbruch (32) der Baufolie (1) aufweisendes Durchbruchselement (33), insbesondere zur Feuchteüberwachung und/oder zum Umschließen von wenigstens einem zumindest abschnittsweise durch den Durchbruch (32) geführten und/oder im Durchbruch (32) angeordneten Durchbruchskörper (34), vorzugsweise einen Ablauf, insbesondere einen Flachdachablauf, und/oder einen Lüfter, insbesondere ein Lüftungsrohr.

## Claims

1. Construction foil (1) with a multilayer structure (3) comprising a carrier layer (2) and a textile layer (11), wherein an electronic unit (4) comprising at least one moisture sensor (6) is printed on the outer side (13) of the carrier layer (2), wherein the textile layer (11) is water-permeable, preferably water-absorbing, wherein the electronic unit (4) is provided between the carrier layer (2) and the textile layer (11), wherein the moisture sensor (6) is in direct contact with the textile layer (11), in particular is arranged on the textile layer (11), and wherein the moisture sensor (6) is designed as a resistive moisture sensor (6).

2. Construction foil according to claim 1, **characterized in that** the moisture sensor (6) is formed by at least two adjacent electrically conductive measuring conductor tracks (27) for resistive moisture measurement.

3. Construction foil according to claim 1 or 2, **characterized in that** the at least two measuring conductor tracks (27) of the moisture sensor (6) mesh with each other and/or that the at least two measuring conductor tracks (27) of the moisture sensor (6) each have a plurality of projecting fingers (28), wherein, preferably, the fingers (28) of the measuring conductor tracks (27) grip each other and/or mesh with each other.

4. Construction foil according to one of the preceding claims, **characterized in that** the moisture sensor (6) is connected to at least one conductor track (5) of the electronic unit (4), preferably to at least two conductor tracks (5), in particular between three and eight conductor tracks (5), in particular wherein the one measuring conductor track (27) is electrically connected to at least one conductor track (5) of the electronics unit (4) and/or in particular wherein the further measuring conductor track (27) is electrically connected to at least one, preferably to at least two, further preferably between three to eight, conductor tracks (5).

5. Construction foil according to one of the preceding claims, **characterized in that** the carrier layer (2) is designed to be waterproof and/or **in that** the carrier layer (2) is designed as a, preferably waterproof, film layer, in particular the carrier layer (2) having as material a plastic, preferably a thermoplastic, further preferably polypropylene, polyethylene and/or polyethylene terephthalate, and/or consisting thereof, polyethylene and/or polyethylene terephthalate, and/or **in that** the carrier layer (2) is open to diffusion, in particular permeable to water vapor, and/or waterproof and/or breathable, and/or **in that** the carrier layer (2) is diffusion-tight, diffusion-inhibiting, impermeable to water vapor and/or waterproof.

6. Construction foil according to one of the preceding claims, **characterized in that** the textile layer (11), preferably formed as a nonwoven layer, has hydrophilic fibers, in particular is composed of hydrophilic fibers, preferably fibers comprising polyethylene terephthalate, and/or **in that** the fibers of the textile layer (11) have a hydrophilic coating.

7. Construction foil according to one of the preceding claims, **characterized in that** a plurality of moisture sensors (6), in particular equally spaced, is provided over the length of the construction foil (1), in particular directly adjacent moisture sensors (6) having a distance (29) from one another of between 10 cm to 5 m, preferably between 20 cm to 3 m, more preferably between 40 cm to 1.5 m.

8. Construction foil according to one of the preceding claims, **characterized in that** the sensor field formed by the moisture sensor (6) has a diameter and/or a maximum extension of between 0.5 cm to 20 cm, preferably between 1 to 10 cm, more preferably between 3 to 8 cm.

9. Construction foil according to one of the preceding claims, **characterized in that** the, in particular minimum, distance (30) between directly adjacent fingers (28) of the measuring conductor tracks (27) and/or the, in particular maximum, width (30) of at least one water line (31) formed between the at least two measuring conductor tracks (27) is less than 1 cm, preferably less than 0.5 cm, more preferably less than 0.3 cm, preferably between 1 mm to 10 mm.

10. Construction foil according to one of the preceding claims, **characterized in that** the width (14) of the carrier layer (2) extends over at least 3%, preferably between 3% to 50%, more preferably between 5% to 25%, preferably between 8% to 16%, of the width (15) of the textile layer (11), in particular wherein the carrier layer (2) arranged on the textile layer (11) is spaced apart from the outer edges (16) of the textile layer (11) and/or is arranged centrally on the textile layer (11) and/or in particular wherein the outer edges (16, 17) of the carrier layer (2) and of the textile layer (11) extend at least substantially parallel to one another and/or in particular wherein the longitudinal axis (18) of the carrier layer (2) extends at least substantially parallel to the longitudinal axis (19) of the textile layer (11).

11. Construction foil according to one of the preceding claims, **characterized in that** the carrier layer (2) has a width (14) between 1 to 100 cm, preferably between 10 to 50 cm, more preferably between 13 to 20 cm, and/or that the textile layer (11) has a width (15) between 0.5 m to 3 m, preferably between 1 to 2 m.

12. Construction foil according to one of the preceding claims, **characterized in that** the layer structure (3) has at least one further layer (20) for forming the construction foil (1) as a roofing membrane, roofing film, flat roofing membrane, facade membrane and/or vapor barrier and/or sub-roofing membrane, in particular underlayment and/or sarking membrane.

13. Construction foil according to one of the preceding claims, **characterized in that** the layer structure (3) is of two-layer design and consists of the carrier layer (2) and the textile layer (11).

14. Roof structure, in particular provided for a flat roof, with a construction foil (1) according to one of the preceding claims, wherein - at least in the installed state of the construction foil (1) - the moisture sensor (6) is arranged on the construction foil (1) on the upper side, facing the weather side, or on the lower side, facing away from the weather side.

15. Use of at least one construction foil (1) according to one of the preceding claims 1 to 13, preferably in the roof structure, as a breakthrough element (33) having at least one breakthrough (32) of the construction foil (1), in particular for moisture monitoring and/or for enclosing at least one breakthrough body (34) guided at least in sections through the breakthrough (32) and/or arranged in the breakthrough (32), preferably a drain, in particular a flat roof drain, and/or a ventilator, in particular a ventilation pipe.

## Revendications

1. Feuille de construction (1), avec une structure de couche multicouche (3) présentant une couche de support (2) et une couche textile (11), une unité électronique (4) présentant au moins un capteur d'humidité (6) étant imprimée sur le côté extérieur (13) de la couche de support (2), la couche textile (11) étant perméable à l'eau, de préférence absorbant l'eau, l'unité électronique (4) étant prévue entre la couche de support (2) et la couche textile (11), le capteur d'humidité (6) étant en contact direct avec la couche textile (11), en particulier étant disposé sur la couche textile (11), et le capteur d'humidité (6) étant conçu comme un capteur d'humidité résistif (6).

2. Feuille de construction selon la revendication 1, **caractérisée en ce que** le capteur d'humidité (6) est formé par au moins deux pistes conductrices de mesure (27) voisines pour la mesure résistive de l'humidité.

3. Feuille de construction selon la revendication 1 ou 2, **caractérisée en ce que** les au moins deux pistes conductrices de mesure (27) du capteur d'humidité (6) s'engrènent l'une avec l'autre et/ou **en ce que** les au moins deux pistes conductrices de mesure (27) du capteur d'humidité (6) présentent chacune une pluralité de doigts saillants (28), les doigts (28) des pistes conductrices de mesure (27) s'accrochant de préférence les uns aux autres et/ou s'engrenant les uns avec les autres.

4. Feuille de construction selon l'une des revendications précédentes, **caractérisée en ce que** le capteur d'humidité (6) est relié à au moins une piste conductrice (5) de l'unité électronique (4), de préférence à au moins deux pistes conductrices (5), en particulier entre trois et huit pistes conductrices (5), en particulier dans laquelle l'une des pistes conductrices de mesure (27) est reliée électriquement à au moins une piste conductrice (5) de l'unité électronique (4) et/ou en particulier dans laquelle l'autre piste conductrice de mesure (27) est reliée électriquement à au moins une, de préférence à au moins deux, de préférence encore entre trois et huit pistes conductrices (5).

5. Feuille de construction selon l'une des revendications précédentes, **caractérisée en ce que** la couche de support (2) est étanche à l'eau et/ou **en ce que** la couche de support (2) est conçue comme une couche de feuille, de préférence étanche à l'eau, en particulier la couche de support (2) étant constituée d'une matière plastique, de préférence d'une matière thermoplastique, de préférence encore de polypropylène, polyéthylène et/ou polyéthylène téréphtalate, et/ou en est constituée, et/ou **en ce que** la couche de support (2) est réalisée de manière à être ouverte à la diffusion, en particulier perméable à la vapeur d'eau, et/ou étanche à l'eau et/ou respirante, et/ou **en ce que** la couche de support (2) est réalisée de manière à être étanche à la diffusion, à empêcher la diffusion, à être imperméable à la vapeur d'eau et/ou étanche à l'eau.

6. Feuille de construction selon l'une des revendications précédentes, **caractérisée en ce que** la couche textile (11), de préférence réalisée sous forme de couche non tissée, présente des fibres hydrophiles, en particulier est constituée de fibres hydrophiles, de préférence de fibres présentant du polyéthylène téréphtalate, et/ou **en ce que** les fibres de la couche textile (11) présentent un revêtement hydrophile.

7. Feuille de construction selon l'une des revendications précédentes, **caractérisée en ce qu'**il est prévu sur la longueur de la feuille de construction (1) une pluralité de capteurs d'humidité (6) espacés en particulier de manière identique, en particulier dans laquelle des capteurs d'humidité (6) directement voisins présentent un écart (29) les uns par rapport aux autres compris entre 10 cm et 5 m, de préférence entre 20 cm et 3 m, de préférence encore entre 40 cm et 1,5 m.

8. Feuille de construction selon l'une des revendications précédentes, **caractérisée en ce que** le champ de capteurs formé par le capteur d'humidité (6) présente un diamètre et/ou une extension maximale compris(e) entre 0,5 cm et 20 cm, de préférence entre 1 et 10 cm, plus préférentiellement entre 3 et 8 cm.

9. Feuille de construction selon l'une des revendications précédentes, **caractérisée en ce que** la distance (30), notamment minimale, de doigts (28) directement voisins des pistes conductrices de mesure (27) et/ou la largeur (30), notamment maximale, d'au moins une conduite d'eau (31) formée entre les au moins deux pistes conductrices de mesure (27) est inférieure à 1 cm, de préférence inférieure à 0,5 cm, de préférence encore inférieure à 0,3 cm, de préférence comprise entre 1 mm et 10 mm.

10. Feuille de construction selon l'une quelconque des revendications précédentes, **caractérisée en ce que** la largeur (14) de la couche de support (2) s'étend sur au moins 3 %, de préférence entre 3 % et 50 %, plus préférentiellement entre 5 % et 25 %, de préférence entre 8 % et 16 %, de la largeur (15) de la couche textile (11), en particulier dans laquelle la couche de support (2) disposée sur la couche textile (11) est espacée des bords extérieurs (16) de la couche textile (11) et/ou est disposée au milieu de la couche textile (11) et/ou en particulier dans laquelle les bords extérieurs (16, 17) de la couche de support (2) et de la couche textile (11) s'étendent au moins sensiblement parallèlement l'un à l'autre et/ou en particulier dans laquelle l'axe longitudinal (18) de la couche de support (2) s'étend au moins sensiblement parallèlement à l'axe longitudinal (19) de la couche textile (11).

11. Feuille de construction selon l'une des revendications précédentes, **caractérisée en ce que** la couche de support (2) présente une largeur (14) comprise entre 1 et 100 cm, de préférence entre 10 et 50 cm, plus préférentiellement entre 13 et 20 cm, et/ou **en ce que** la couche textile (11) présente une largeur (15) comprise entre 0,5 m et 3 m, de préférence entre 1 et 2 m.

12. Feuille de construction selon l'une des revendications précédentes, **caractérisée en ce que** la structure de couche (3) présente au moins une autre couche (20) pour la réalisation de la feuille de construction (1) en tant que bande de toit, feuille de toit, bande de toit plat, bande de façade et/ou pare-vapeur et/ou bande de sous-toiture, en particulier bande de sous-couverture et/ou de sous-tension.

13. Feuille de construction selon l'une des revendications précédentes, **caractérisée en ce que** la structure de couche (3) est réalisée en deux couches et se compose de la couche de support (2) et de la couche textile (11).

14. Structure de toit, prévue en particulier pour un toit plat, avec une feuille de construction (1) selon l'une des revendications précédentes, dans laquelle - au moins à l'état monté de la feuille de construction (1) - le capteur d'humidité (6) est disposé sur la feuille de construction (1) du côté supérieur, tourné vers le côté exposé aux intempéries, ou du côté inférieur, tourné à l'opposé du côté exposé aux intempéries.

15. Utilisation d'au moins une feuille de construction (1) selon l'une des revendications précédentes 1 à 13, de préférence dans la structure du toit, en tant qu'élément de percement (33) présentant au moins une ouverture (32) de la feuille de construction (1), en particulier pour surveiller l'humidité et/ou pour entourer au moins un corps de percement (34) guidé au moins par sections à travers l'ouverture (32) et/ou disposé dans l'ouverture (32), de préférence un écoulement, en particulier un écoulement de toit plat, et/ou un ventilateur, en particulier un tuyau de ventilation.
